(19) Europäisches Patentamt
European Patent Office
Office européen des brevets

(11) EP 2 377 902 A1

(12) **EUROPEAN PATENT APPLICATION**
published in accordance with Art. 153(4) EPC

(43) Date of publication:
**19.10.2011 Bulletin 2011/42**

(21) Application number: **10731235.7**

(22) Date of filing: **12.01.2010**

(51) Int Cl.:
***C09D 183/06*** *(2006.01)* ***B05D 5/00*** *(2006.01)*
***B05D 7/24*** *(2006.01)* ***C09D 5/00*** *(2006.01)*
***C09D 7/12*** *(2006.01)*

(86) International application number:
**PCT/JP2010/050227**

(87) International publication number:
**WO 2010/082566 (22.07.2010 Gazette 2010/29)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **13.01.2009 JP 2009004781**

(71) Applicant: **Tokuyama Corporation**
**Shunan-shi, Yamaguchi 745-8648 (JP)**

(72) Inventors:
- **NAKATSUKASA, Shunichiro**
**Shunan-shi**
**Yamaguchi 745-8648 (JP)**
- **MORI, Katsuhiro**
**Shunan-shi**
**Yamaguchi 745-8648 (JP)**

(74) Representative: **Duckworth, Timothy John**
**J.A. Kemp & Co.**
**14 South Square**
**Gray's Inn**
**London WC1R 5JJ (GB)**

# (54) COATING COMPOSITION, PROCESS FOR PRODUCTION OF THE COMPOSITION, AND LAMINATE WITH HARD COAT LAYER

(57) [Abstract] To provide a coating composition capable of forming a hard coat layer having excellent transparency and scratch resistance on the surface of an optical resin substrate such as a plastic lens, and exhibiting long-term storage stability.

[Means for Solution] The coating composition comprises (A) a fine particulate composite metal oxide, (B') a hydrolyzed product obtained by the hydrolysis of (B) a hydrolyzable organosilicon compound containing (B1) an organosilicon compound that has an epoxy group, such as γ-glycidoxypropyltrimethoxysilane, (C) water, (D1) a low-boiling lowly viscous alcohol having not more than 3 carbon atoms, such as methanol or ethanol, (D2) a low-boiling highly viscous alcohol such as t-butanol, (D3) a high-boiling organic solvent having a boiling point of 150°C to 200°C, such as diacetone alcohol, and (E) a curing catalyst such as tris(2,4-pentanedionato)aluminum(III), the mass ratio (D1/C) of the component (D1) and the component (C) being in a range of 1.80 to 7.00, the mass ratio (D2/C) of the component (D2) and the component (C) being in a range of 0.24 to 2.50, and the mass ratio (D3/C) of the component (D3) and the component (C) being in a range of 1.10 to 4.40.



Printed by Jouve, 75001 PARIS (FR)

## Description

Technical Field:

This invention relates to a novel coating composition, a process for producing the same, and a novel laminate having a hard coat layer (cured product layer) formed by curing the coating composition. Concretely, the invention relates to a coating composition capable of forming an optimum hard coat layer on the surfaces of a high refractive index resin substrate (lens) having a refractive index of not smaller than 1.5 and on the surfaces of a photochromic optical substrate such as a photochromic plastic lens

Background Art:

Plastic lenses (resin substrates) are finding widespread use in recent years owing to their features such as small weight, safety, easy formability and fashionableness which are not possessed by glass lenses. However, diethylene glycol bisallyl carbonate resin lenses that are generally used have a defect in that their refractive indexes are smaller than those of glasses and their thickness tend to increase toward the outer circumferences thereof. In the field of resin lenses, therefore, attempts have been made to decrease the thickness by using plastic lenses having higher refractive indexes.
The resin lenses, however, are liable to be easily scratched. Therefore, it is a generally accepted practice to apply a silicone type coat layer onto the surfaces of the resin lenses. The silicone type coat layer is formed by applying a coating composition comprising chiefly fine silica particles, a polymerizable organosilicon compound, a polymerization catalyst, an acidic aqueous solution and a solvent (see patent document 1: hereinafter also referred to as low refractive index coating composition) onto the surface of the resin lens, followed by heating to cure the composition and to volatilize the solvent.
When the coat layer is applied onto the high refractive index resin lens having a refractive index of not smaller than 1. 50 by using the above low refractive index coating composition, however, interference fringes occur due to a difference in the refractive index between the resin lens and the coat layer becoming a cause of defective appearance. In order to solve the above problem, study has been forwarded concerning (i) a coating composition using composite metal oxides of Sb, Ti, Zr and Sn having high refractive indexes in place of using fine silica particles which are one of the components of the coating composition (see patent document 2), (ii) a coating composition using Ti, Ce and Sn in their place (see patent document 3), (iii) a coating composition using composite metal oxides of Ti, Sn, Zr (see patent document 4) , and (iv) a coating composition using composite metal oxides of Ti and Sb (see patent document 5). The coating compositions using the composite metal oxides of (i) to (iv) can be favorably used for forming a coat layer on the high refractive index resin lenses. According to the study by the present inventors, however, it was learned that by using the above coating compositions, the hard coat layer cannot be formed maintaining a large thickness. Therefore, it has been desired to develop a coating composition with which a coat layer can be thickly formed, which suppresses slight scratches that might be formed on the surface prior to applying the hard coat layer in the step of handling the resin substrate, and which is capable of forming a coat layer having excellent scratch resistance.
As a coating composition for producing a lens having sufficiently large scratch resistance, on the other hand, there has been proposed a coating composition obtained by adding water in a mol number 1.5 to 4.5 times as great as the mol number of the hydrolyzable groups of a hydrolyzable organosilicon compound (see patent document 6). This coating composition is an excellent composition which makes it possible to form an organic reflection-preventing film by a wet-type method on the hard coat layer that is formed. It was, however, learned that the above coating composition has room for improvement in regard to the points described below. Namely, with the above coating composition, it is allowed to form a coat layer of a thickness of only about 2 μm as described in Examples probably due to water contained in large amounts, and there remains room for improvement from the standpoint of forming a thick coat layer capable of maintaining sufficiently large scratch resistance for extended periods of time. In recent years, further, it has been urged to provide a coating composition capable of maintaining storage stability for extended periods of time and, particularly, capable of maintaining its function even after stored for extended periods of time. Therefore, it has been desired to develop a coating composition having higher storage stability than that of the conventional coating compositions.

Prior Art Documents:

Patent Documents:

Patent document 1: JP-B-57-2735

Patent document 2: JP-A-5-264805
Patent document 3: JP-A-10-245523
Patent document 4: JP-A-9-49215
Patent document 5: JP-A-2002-363442
Patent document 6: JP-A-2006-111702
Patent document 7: WO2003/011967
Patent document 8: JP-A-2003-342310

Outline of the Invention:

Problems that the Invention is to Solve:

It is an object of the present invention to provide a coating composition capable of forming a hard coat layer which has excellent close adhesion that, even after the weather-proofing test, remains the same as before the test and which excels in scratch resistance. The invention, further, provides a coating composition having excellent storage stability. Further, the invention provides a coating composition that can be favorably used as a coat layer on the surfaces of a photochromic optical substrate.

Means for Solving the Problems:

The present inventors have forwarded keen study in an effort to solve the above problems and have studied a coating composition capable of enhancing scratch resistance by using water in relatively large amounts and improving affinity to the resin substrate that tends to be deteriorated by an increase in the amount of water. As a result, the inventors have discovered that the above problems can be solved when specific solvents are used in combination, i.e., when a coating composition is obtained by using water-soluble organic solvents having greatly different boiling points in combination, and have completed the invention.

That is, according to the present invention, there is provided a coating composition comprising:

(A) a fine particulate composite metal oxide;
(B') a hydrolyzed product of a hydrolyzable organosilicon compound containing an organosilicon compound (B1) that has an epoxy group and a hydrolyzable group;
(C) water;
(D) a water-soluble organic solvent; and
(E) a curing catalyst;

wherein the water-soluble organic solvent (D) is a solvent that contains (D1) a low-boiling lowly viscous alcohol having not more than 3 carbon atoms, (D2) a low-boiling highly viscous alcohol selected from the group consisting of t-butanol, n-butanol and 2-butanol, and (D3) a high-boiling organic solvent having a boiling point of 150˚C to 200˚C;
the low-boiling lowly viscous alcohol (D1) being contained in such an amount that the mass ratio (D1/C) thereof to the water (C) is in a range of 1.80 to 7.00;
the low-boiling highly viscous alcohol (D2) being contained in such an amount that the mass ratio (D2/C) thereof to the water (C) is 0.24 to 2.50; and
the high-boiling organic solvent (D3) being contained in such an amount that the mass ratio (D3/C) thereof to the water (C) is 1.10 to 4.40.
Hereinafter, the low-boiling lowly viscous alcohol (D1), the low-boiling highly viscous alcohol (D2) and the high-boiling organic solvent (D3) are all often referred to simply as "water-soluble organic solvents (D)". The water-soluble organic solvents (D) stand for organic solvents having solubilities in water at 25˚C of not smaller than 10% by mass and, preferably, not smaller than 50% by mass.

In the above coating composition of the present invention, it is desired that:

(1) The low-boiling highly viscous alcohol (D2) is a t-butyl alcohol and the high-boiling organic solvent (D3) is a diacetone alcohol; and
(2) The fine particulate composite oxide (A) is contained in an amount of 25.0 to 70.0 parts by mass, the water (C) is contained in an amount of 5.0 to 65.0 parts by mass, and the curing catalyst (E) is contained in an amount of 1.0 to 5.0 parts by mass per 100 parts by mass of the total amount of the fine particulate composite oxide (A) and the hydrolyzed product (B').

According to the present invention, there is, further, provided a process for producing a coating composition

by providing:

(A) a fine particulate composite metal oxide;
(B) a hydrolyzable organosilicon compound containing an organosilicon compound (B1) that has an epoxy group and a hydrolyzable group;
(C) water;
(D) a water-soluble organic solvent; and
(E) a curing catalyst;

and forming a hydrolyzed product (B') of the hydrolyzable Organosilicon compound (B) in a step of mixing the above components;
wherein (D1) a low-boiling lowly viscous alcohol having not more than 3 carbon atoms, (D2) a low-boiling highly viscous alcohol selected from the group consisting of t-butanol, n-butanol and 2-butanol, and (D3) a high-boiling organic solvent having a boiling point of 150˚C to 200˚C, are used in combination as the water-soluble organic solvent (D); and
the components (A), (B), (C), (D) and (E) are used in such amounts that per 100 parts by mass of the total amount of the fine particulate composite oxide (A) and the hydrolizable Organosilicon compound (B):

the fine particulate composite oxide (A) is fed in an amount of 20.0 parts by mass to 60.0 parts by mass, the water (C) is fed in an amount of 20.0 to 70.0 parts by mass, and the curing catalyst (E) is fed in an amount of 0.9 to 5.0 parts by mass;
the feeding mass ratio (D1/C) of the low-boiling lowly viscous alcohol (D1) to the water (C) being 0.55 to 3.00;
the feeding mass ratio (D2/C) of the low-boiling highly viscous alcohol (D2) to the water (C) being 0.18 to 1.80; and
the feeding mass ratio (D3/C) of the high-boiling organic solvent (D3) to the water (C) being 0.70 to 2.70.

In the invention of the process for producing the coating composition, it is desired that:

(3) A t-butyl alcohol is used as the low-boiling highly viscous alcohol (D2) and a diacetone alcohol is used as the high-boiling organic solvent (D3);
(4) The hydrolyzable organosilicon compound (B) is hydrolyzed in the absence of the fine particulate composite metal oxide (A) , and the fine particulate composite metal oxide (A) is mixed after the hydrolyzed product (B') of the hydrolyzable organosilicon compound (B) has been formed;
(5) The hydrolyzable organosilicon compound (B), further, contains an organosilicon compound (B2) having not less than 4 hydrolyzable groups in the molecules thereof, and the organosilicon compound (B1) having an epoxy group and a hydrolyzable group and the organosilicon compound (B2) are fed at a mass ratio (B1/B2) of 0.30 to 10.00;
(6) A tetraalkoxysilane is used as the organosilicon compound (B2) having not less than 4 hydrolyzable groups in the molecules thereof; and
(7) A disilane compound represented by the following formula (1),

[Chemical 1]

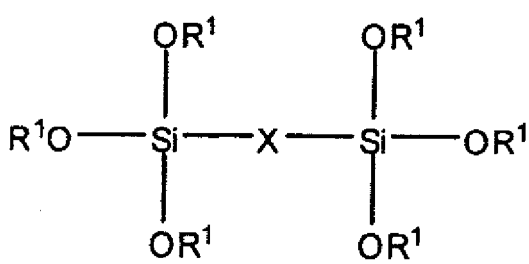

(1)

wherein $R^1$ is a methyl group or an ethyl group, and X is
an alkylene group having 2 to 3 carbon atoms, is used as the organosilicon compound (B2) having not less than 4 hydrolyzable groups in the molecules thereof.
According to the present invention, further, there is provided a laminate in which a hard coat layer obtained by curing the coating composition is formed on the surface of a resin substrate.
In the invention of the above laminate, it is desired that:

(8) The resin substrate is a photochromic optical substrate; and

(9) The photochromic optical substrate has, on the surface thereof, a photochromic coat layer obtained by curing the curable composition that contains a photochromic compound, and the hard coat layer is formed on the photochromic coat layer.

Effects of the Invention:

Upon using water and water-soluble organic solvents having specific properties in combination, the coating composition obtained by the present invention is capable of forming a hard coat layer that exhibits excellent effects. Particularly, upon containing a low-boiling highly viscous alcohol and a high-boiling water-soluble organic solvent, the coating composition can be favorably applied onto the surface of an optical substrate such as a plastic lens. Due to a relatively high viscosity of the coating composition, further, the hard coat layer can be easily formed maintaining a large thickness. Upon using a low-boiling lowly viscous alcohol, further, the fine particulate composite metal oxide can be favorably dispersed making it possible to form a flat and homogeneous hard coat layer. As a result, the hard coat layer exhibits excellent scratch resistance.

Further, the coating composition little repels the resin substrate, and a hard coat layer having excellent appearance can be formed. Moreover, the hard coat layer having excellent weather-proof property remains closely adhered to the resin substrate over extended periods of time. Further, the coating composition of the present invention features excellent storage stability for extended periods of time. Therefore, even after stored for extended periods of time, a hard coat layer can be formed maintaining excellent appearance, scratch resistance and close adhesion. That is, the coating composition maintains its function over extended periods of time and makes it possible to stably produce resin lenses having excellent hard coat layer, offering high industrial values.

The coating composition obtained by the present invention can be also favorably used for forming a hard coat layer on the surfaces of the photochromic optical substrates. specifically, when used for forming a hard coat layer on the photochromic optical substrate that has a photochromic coat layer formed on the surface of the substrate, the coating composition of the invention helps prevent a decrease in the properties of the photochromic compound.

Brief Description of the Drawing:

[Fig. 1] is a sectional view showing a representative embodiment of a photochromic optical substrate of the present invention.

Mode for Carrying Out the Invention:

(Coating composition)

The coating composition of the present invention comprises, as basic components, (A) a fine particulate composite metal oxide; (B') a hydrolyzed product of a hydrolyzable organosilicon compound containing an organosilicon compound (B1) having an epoxy group and a hydrolyzable group; (C) water; (D) a water-soluble organic solvent; and (E) a curing catalyst; wherein the water-soluble organic solvent (D) is a solvent that contains (D1) a low-boiling lowly viscous alcohol having not more than 3 carbon atoms, (D2) a low-boiling highly viscous alcohol selected from the group consisting of t-butanol, n-butanol and 2-butanol, and (D3) a high-boiling organic solvent having a boiling point of 150˚C to 200˚C; the low-boiling lowly viscous alcohol (D1) being contained in such an amount that the mass ratio (D1/C) thereof to the water (C) is in a range of 1.80 to 7.00; the low-boiling highly viscous alcohol (D2) being contained in such an amount that the mass ratio (D2/C) thereof to the water (C) is 0.24 to 2.50; and the high-boiling organic solvent (D3) being contained in such an amount that the mass ratio (D3/C) thereof to the water (C) is 1.10 to 4.40. By applying the coating composition onto the surface of the resin substrate and curing it, there can be formed a hard coat layer having excellent properties. The above-mentioned components will now be described.

<(A) Fine particulate composite metal oxide>

The fine particulate composite metal oxide (A) used in the invention contains two or more kinds of metal oxides. Concrete examples are fine particles in which at least two or more kinds of metal oxides such as tin oxide, tungsten oxide, titanium oxide, zirconium oxide, antimony pentoxide and silicon dioxide are bonded together on a molecular level, or fine particles of a structure of a plurality of layers comprising the above fine particles as nuclei and on which other fine particulate metal oxides are, further, laminated like layers. Among them, fine particulate composite oxides without

containing titanium oxide are preferred from the standpoint of weather-proof property of the obtained hard coat layer. The fine particulate composite metal oxide (A) is, usually, used being flown as a colloidal dispersion solution by colloidally dispersing the fine particulate composite metal oxide in a dispersion medium of water or alcohol type solvent or an other organic solvent.

There is no particular limitation on the fine particulate composite metal oxide (A) provided it comprises the above metal oxides. It is, however, desired that titanium oxide is contained in an amount in a range of 0 to 80% by mass, zirconium oxide in a range of 1 to 25% by mass, tin oxide in a range of 0 to 80% by mass, antimony pentoxide in a range of 0 to 20% by mass, tungsten oxide in a range of 0 to 10% by mass and silicon doxide in a range of 0 to 25% by mass. The titanium oxide has a photocatalytic action and is considered to decompose organic components such as the condensed product of the hydrolyzable organosilicon compound (B) contained in the hard coat layer. Therefore, weather-proof property and close adhesion tend to be deteriorated as compared to when the titanium oxide is not contained. By taking the weather-proof property of the obtained hard coat layer into consideration, therefore, it is desired that the fine particulate composite metal oxide contains no titanium oxide but contains a composite metal oxide of tin oxide and zirconium oxide in an amount of 70 to 99% by mass and antimony pentoxide and silicon dioxide in a total amount of 1 to 30% by mass. Among them, it is most desired that the fine particulate composite metal oxide contains tin oxide in an amount of 50 to 96% by mass, zirconium oxide in an amount of 3 to 49% by mass, antimony pentoxide in an amount of 1 to 30% by mass and silicon dioxide in an amount of 0 to 29% by mass.

As described above, it is desired that the fine particulate composite metal oxide is used being colloidally dispersed in a dispersion medium of water or an alcohol type organic solvent such as methanol, ethanol, n-propanol, isopropanol, t-butyl alcohol, n-butyl alcohol or modified alcohol. Among these dispersion media, it is desired to use an alcohol that corresponds to a low-boiling lowly viscous alcohol (D1) that will be described later if the dispersion state of the fine particulate composite metal oxide is taken into account. Concretely, it is desired to use methanol, ethanol or modified ethanol containing isopropanol. In the present invention, when the fine particulate composite metal oxide (A) is used in the form of a colloidal dispersion solution, the amounts of water and alcohol included in the dispersion solution must be taken into account as those included in water (C) and low-boiling lowly viscous alcohol (D1) that will be described later. In this case, further, the amount of the fine particulate composite metal oxide corresponds to the amount of the solid components in the colloidal dispersion solution.

When the above colloidal dispersion solution is used, the ratio of the fine particulate composite metal oxide occupying the dispersion solution is, preferably, 20% by mass to 50% by mass and, more preferably, 25% by mass to 50% by mass. By using the dispersion solution of a concentration in this range, it is allowed to produce a coating composition of a high concentration maintaining stability. It is, further, made possible to increase the refractive index of the hard coat layer comprised of the coating composition and to increase the thickness of the coat layer so as to exhibit excellent scratch resistance. In particular, the hard coat layer formed on the photochromic coat layer helps prevent a decrease in the properties of the photochromic compound.

To enhance the dispersion stability in the coating composition, the fine particulate composite metal oxide (A) may be the one of which the surfaces are treated with an amine type compound and/or a carboxylic acid.

As the amine type compounds, there can be exemplified ammonium or alkylamines such as ethylamine, triethylamine, isopropylamine, n-propylamine, dimethylamine, diethylamine, diisopropylamine and dipropylamine; aralkylamines such as benzylamine, etc.; alicyclic amines such as morpholine and piperidine; and alkanolamines such as monoethanolamine, diethanolamine, triethanolamine and isopropanolamine. As the carboxylic acid, there can be exemplified acetic acid, oxalic acid, lactic acid, maric acid, citric acid, tartaric acid, salicylic acid, glycolic acid, benzoic acid, phthalic acid, malonic acid and mandelic acid. These amine compounds and/or carboxylic acid can be used in amounts in a range of 0.01 to 5 parts by mass per 100 parts by mass of the fine particulate composite metal oxide (A).

Though there is no particular limitation, it is desired that the particle size of the fine particulate composite metal oxide (A) is, as mean particle size, 1 to 300 nm so will not to impair the transparency of the hard coat layer. Such a fine particulate composite metal oxide (A) may be the one placed in the market, such as HX Series manufactured by Nissan Kagaku Kogyo Co. or HIT Series manufactured by Nissan Kagaku Kogyo Co.

(Content of the fine particulate composite metal oxide)

In the coating composition of the present invention, it is desired that if the total amount of the fine particulate composite oxide (A) and the hydrolyzed product (B') is supposed to be 100 parts by mass, the content of the fine particulate composite metal oxide (A) is 25.0 to 70.0 parts by mass. With the content of the fine particulate composite metal oxide (A) being not less than 25.0 parts by mass, the formed hard coat layer exhibits sufficiently large scratch resistance and refractive index making it possible to suppress the occurrence of cracks. This, further, helps improve the storage stability of the obtained coating composition. By taking the properties of the formed hard coat layer, prevention of cracks and storage stability of the coating composition into consideration, the content thereof is, preferably, 31.0 to 70.0 parts by mass, more preferably, 36.0 to 70.0 parts by mass and, particularly preferably, 36.0 go 65.0 parts by mass.

The content of the fine particulate composite metal oxide (A) can be calculated from the feeding amount of the hydrolyzable organosilicon compound (B) that will be described later. That is, in the present invention, the hyrolyzable organosilicon compound (B) is hydrolyzed theoretically in the whole amount. Therefore, the amount of the hydrolyzed product (B') can be found from the amount of the organosilicon compound (B) that is fed. On the other hand, the amount of the fine particulate composite metal oxide (A) in the coating composition is nearly the same as the amount thereof that is fed. Therefore, the total amount of the fine particulate composite metal oxide (A) and the hydrolyzed product (B') becomes equal to the total amount of the amount of the fine particulate composite metal oxide (A) that is fed and the amount of the hydrolyzed product (B') found by the above method. The content of the fine particulate composite metal oxide (A) represents the amount of the fine particulate composite metal oxide (A) relative to the above total amount.

Further, the content of the fine particulate composite metal oxide (A) can be directly estimated from the coating composition by a method described below. Concretely, the coating composition is dried at 120˚C for 3 hours to find the mass of the solid content contained in the coating composition. Here, the amount of water that has increased during the drying is measured. The solid content usually and in large part comprises the fine particulate composite metal oxide (A) and the condensed product formed by the dehydration of the hydrolyzed product (B'). Next, the metal components contained in the solid content are analyzed by the X-ray diffraction or the like method to make sure the composition of the fine particulate composite metal oxide (A) that is contained. Then the amount of the dehydrated and condensed product formed from the fine particulate composite metal oxide(A) and the hydrolyzed product (B') in the solid content is estimated from a difference between the refractive index of the solid content and the refractive index of the fine particulate composite metal oxide (A) of which the composition has been confirmed. The total amount of the fine particulate composite metal oxide (A) and the hydrolyzed product (B') becomes nearly equal to the total amount of the solid content and the water that has increased during the drying. As a result, it is also made possible to calculate the content of the fine particulate composite metal oxide (A) from the amount of the fine particulate composite metal oxide estimated from the difference in the refractive index and from the total amount of the solid content and the water that has increased during the drying.

<(B') Hydrolyzed product>

The hydrolyzed product (B') is a hydrolyzed product formed by the hydrolysis of the hydrolyzable organosilicon compound (B) that contains the organosilicon compound (B1) having an epoxy group and a hydrolyzable group. In this invention, the hydrolyzed product (B') is a component that forms a cured body that serves as a matrix when the hard coat layer is formed by curing the coating composition. As will be described later in detail, the amount of the hydrolyzed product (B') that is formed can be found by determining the amount of alcohol formed in the coating composition. Further, the hydrolyzed product (B') may often have been partly dehydrated and condensed. In such a case, the ratio of condensation of the hydrolyzed product (B') can be estimated from the amount of water formed accompanying the condensation.

<(B) Hydrolyzable organosilicon compound>

The hydrolyzable organosilicon compound (B) contains the organosilicon compound (B1)(hereinafter often referred to simply as epoxy group-containing organosilicon compound) having an epoxy group and a hydrolyzable group.

<(B1) Epoxy group-containing organosilicon compound>

The epoxy group-containing organosilicon compound (B1) may be a known organosilicon compound. Concretely, there can be exemplified γ-glycidoxypropyltrimethoxysilane, γ-glycidoxypropylmethyldimethoxysilane, γ-glycidoxypropylmethyldiethoxysilane, γ-glycidoxypropyltriethoxysilane, and β-(3,4-epoxycyclohexyl)ethyltrimethoxysilane. Among them, it is desired to use the one which upon being hydrolyzed forms a low-boiling lowly viscous alcohol (D1) that will be described later from the standpoint of dispersion of the fine particulate composite metal oxide in the obtained coating composition. Further, from the standpoint of close adhesion between the formed hard coat layer and the resin substrate, crosslinking property of the hard coat layer and scratch resistance, it is desired to use the γ-glycidoxypropyltrimethoxysilane or γ-glycidoxypropylmethyldimethoxysilane. The epoxy group-containing organosilicon compound (B1) can be used in one kind or in two or more kinds in combination.

<Other hydrolyzable organosilicon compounds>

In the present invention, the hydrolyzable Organosilicon compound component (B) may be the above epoxy group-containing organosilicon compound (B1) only or may contain other hydrolyzable organosilicon compounds. It is desired that in the obtained coating composition, the other organosilicon compounds upon being hydrolyzed form the

low-boiling lowly viscous alcohol (D1) that will be described later from the standpoint of dispersion of the fine particulate composite metal oxide.

Examples of the other organosilicon compounds include vinyltrimethoxysilane, vinyltriethoxysilane, vinyltriacetoxysilane, methyltrimethoxysilane, methyltriethoxysilane, methyltriphenoxysilane, dimethyldimethoxysilane, trimethylmethoxysilane, phenyltrimethoxysilane, diphenyldimethoxysilane, cyclohexylmethyldimethoxysilane, n-propyltrimethoxysilane, n-butyltrimethoxysilane, isobutyltrimethoxysilane, isobutyltriethoxysilane, n-hexyltrimethoxysilane, n-hexyltriethoxysilane, n-octyltriethoxysilane, n-decyltrimethoxysilane, 3-ureidopropyltriethoxysilane, trifluoropropyltrimethoxysilane, perfluorooctylethyltriethoxysilane, γ-chloropropyltrimethoxysilane, vinyltri(β-methoxy-ethoxy)silane, allyltrimethoxysilane, γ-acryloxypropyltrimethoxysilane, γ-acryloxypropyltriethoxysilane, γ-methacryloxypropytrimethoxysilane, γ-methacryloxypropyltriethoxysilane, γ-methacryloxypropyldimethoxymethylsilane, γ-mercaptopropyltrimethoxysilane, γ-aminopropyltrimethoxysilane, γ-aminopropyltriethoxysilane, N-phenyl-γ-aminopropyltrimethoxysilane, N-2(aminoethyl)3-aminopropyltriethoxysilane, N-2(aminoethyl)3-aminopropyltrimethoxysilane, N-2(aminoethyl)3-aminopropylmethyldimethoxysilane, p-styryltrimethoxysilane and 3-isocyanatepropyltriethoxysilane.

<(B2) Polyvalent decomposable group-containing organosilicon compound>

Among other organosilicon compounds, it is desired that the hydrolyzable organosilicon compound (B) further contains an organosilicon compound (B2; hereinafter also referred to as polyvalent decomposable group-containing organosilicon compound)) having four or more hydrolyzable groups in the molecules thereof in addition to the epoxy group-containing organosilicon compound (B1) from the standpoint of increasing the hardness and scratch resistance of the formed hard coat layer. Use of the polyvalent decomposable group-containing organosilicon compound (B2) helps increase the hardness of the hard coat layer. This is because the four or more alkoxysilyl groups in the molecules work to build up a more densely crosslinked structure in the hard coat layerthan the one built up by using an organosilicon compound having not more than three alkoxysilyl groups in the molecules.

The polyvalent decomposable group-containing organosilicon compound (B2) is desirably a tetraalkoxysilane or a disilane compound represented by the following formula (1),

[Chemical 2]

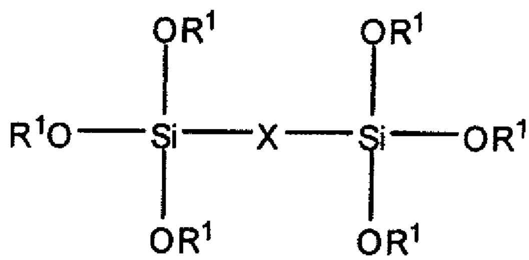

(1)

(wherein $R^1$ is a methyl group or an ethyl group, and X is an alkylene group having 2 to 3 carbon atoms).

As the tetraalkoxysilane, there can be exemplified tetramethoxysilane, tetraethoxysilane, tetrapropoxysilane, tetraisopropoxysilane and tetrabutoxysilane. As the disilane compound represented by the above formula (1), there can be exemplified bis(methyldiethoxysilyl)ethane, bis(triethoxysilyl)methane, 1,2-bis(triethoxysilyl)ethane and 1,2-bis(trimethoxysilyl)ethane. Among them, the tetraethoxysilane and 1,2-bis(triethoxysilyl)ethane are preferred from the standpoint of rate of hydrolysis of the alkoxy groups, toxicity and cost.

When the disilane compound is used, the alkali resistance of the formed hard coat layer can be improved and, besides, the heat resistance can be improved in addition to obtaining the above effects. As a result, the laminate of the present invention is capable of suppressing the delamination of the hard coat layer even in case it comes in contact with an alkali or hot water. Further, even when maintained at high temperatures, it is allowed to decrease the occurrence of cracks stemming from a difference in the thermal expansion between the resin substrate and the hard coat layer and, therefore, the formability can be improved.

When the polyvalent decomposable group-containing organosilicon compound (B2) is used, the feeding mass ratio (B1/B2) thereof to the epoxy group-containing organosilicon compound (B1) is, preferably, 0.30 to 10.00, more preferably, 1.50 to 6.00 and, particularly preferably, 2.00 to 5.00 from the standpoint of scratch resistance of the obtained hard coat layer and storage stability. If B1/B2 is less than 0.30, the scratch resistance is not sufficient. If B1/B2 exceeds 10.00, on the other hand, the storage stability decreases and the obtained hard coat layer tends to be cracked.

The hydrolyzable organosilicon compound (B) may contain the above-mentioned other organosilicon compounds in addition to the epoxy group-containing organosilicon compound (B1) and the polyvalent decomposable group-containong organosilicon compound (B2). The amount of use thereof is desirably not larger than 10 parts by mass per 100 parts by mass of the total amount of the epoxy group-containing organosilicon compound (B1) and the polyvalent decomposable group-containing organosilicon compound (B2). Crosslinking property of the obtained hard coat layer tends to decrease with an increase in the ratio of the hydrolyzable organosilicon compound other than the epoxy group-containing organosilicon compound (B1) and the polyvalent decomposable group-containing organosilicon compound (B2). Specifically, when the hard coat layer is formed on the photochromic coat layer, the effect for preventing a decrease in the photochromic properties tends to become small. It is, therefore, desired that the hydrolyzable organosilicon compound (B) contains only two of the epoxy group-containing organosilicon compound (B1) and the polyvalent decomposable group-containing organosilicon compound (B2). The feeding mass ratio (B1/B2) thereof is, preferably, 0.30 to 10.00, more preferably, 1.50 to 6.00 and, particularly preferably, 2.00 to 5.00 like the above-mentioned ranges.

<Content of the hydrolyzed product (B')>

The coating composition of the present invention theoretically contains the hydrolyzed product (B') formed by the hydrolysis of the whole amount of the hydrolyzable organosilicon compound (B) that is used.
The content of the hydrolyzed product (B') is preferably 25.0 to 70.0 parts by mass with the total amount of the fine particulate composite oxide (A) and the hydrolyzed product (B') as 100 parts by mass. If the content of the hydrolyzed product (B') is less than 25.0 parts by mass, the formed hard coat layer tends to be cracked and, besides, close adhesion to the optical substrate such as plastic lens tends to decrease. If the content thereof exceeds 70.0 parts by mass, on the other hand, the scratch resistance and the refractive index of the hard coat layer decrease. By taking properties of the formed hard coat layer, suppression of cracks, close adhesion and storage stability of the coating composition into consideration, the content of the hydrolyzed product (B') is, preferably, 30.0 to 69.0 parts by mass, more preferably, 30.0 to 64.0 parts by mass and, particularly preferably, 35.0 to 64.0 parts by mass with the total amount of the fine particulate composite oxide (A) and the hydrolyzed product (B') as 100 parts by mass. The content thereof can be calculated from the amount of the hydrolyzable Organosilicon compound (B) that is fed. The content thereof can also be directly confirmed from the coating composition relying on the method of estimating the content of the fine particulate composite oxide (A) described above.

<(C) Water>

In the coating composition of the present invention, water (C) works to promote the hydrolysis of the hydrolyzable organosilicon compound (B) and to stabilize the hydrolyzed product that is formed. The water (C) may contain an acid in order to efficiently hydrolyze and condense the alkoxysilyl groups. As the acid to be used, any known acid can be used without limitation which is capable of hydrolyzing and condensing the hydrolyzable organosilicon compound (B). Examples of the acid include inorganic acids such as hydrochloric acid, sulfuric acid, nitric acid and phosphoric acid, and organic acids such as acetic acid and propionic acid. Among them, the hydrochloric acid and acetic acid are preferably used from the standpoint of storage stability and hydrolyzing property of the coating composition. The hydrochloric acid and acetic acid are used preferably in the form of an aqueous solution thereof having a concentration of 0.001 N to 2 N. If the concentration is less than 0.001 N, the hydrolyzable organosilicon compound (B) cannot be fully efficiently hydrolyzed. If the concentration exceeds 2 N, on the other hand, the pH of the obtained coating composition becomes too acidic. Therefore, the dispersion stability of the fine particulate composite metal oxide (A) decreases, the transparency of the obtained hard coat layer decreases, and the storage stability of the coating composition often decreases.

<Content of water (C)>

The content of water (C) is 5.0 to 65.0 parts by mass with the total amount of the fine particulate composite oxide (A) and the hydrolyzed product (B') as 100 parts by mass. If the content of water is less than 5.0 parts by mass, the storage stability of the obtained coating composition decreases, the hydrolyzable organosilicon compound (B) is insufficiently hydrolyzed, and the formed hard coat layer exhibits decreased scratch resistance and defective appearance. This is because if water is added in small amounts, it is considered that the silanol groups formed by the hydrolysis of the hydrolyzable organosilicon compound (B) are not stabilized by the interchange reaction with water, dehydration and condensation take place among the silanols forming high molecular components, and the scratch resistance decreases. Further, since the hydrolysis is not sufficient, there are not formed silanol groups enough for satisfying the properties. As a result, a densely crosslinked structure is not formed to provide a sufficient degree of hardness. Besides, wettability to the optical substrate such as plastic lens decreases, and the appearance becomes defective. If the content of water (C) exceeds 65.0 parts by mass, on the other hand, the hydrolyzable organosilicon compound (B) is hydrolyzed to a

sufficient degree but the formed hard coat layer becomes cloudy.

It is considered that the hard coat layer becomes cloudy since the fine particulate composite metal oxide (A) is dispersed less stably and is aggregated. Defective appearance is considered to stem from a decreased wettability onto the optical substrate such as plastic lens due to a large amount of water that is added. Therefore, by taking the storage stability, appearance and scratch resistance of the formed hard coat layer into consideration, water is more preferably blended in an amount of 10.0 to 65.0 parts by mass.

The content of water (C) contained in the coating composition can be found by titrating the coating composition for the HYDRANAL Composite 5K of Riedel-de Haen Co. by using the MKA-210 manufactured by KYOTO ELECTRONICS Co.

<(D) Water-soluble organic solvent>

In the coating composition of the present invention, a feature resides in that the water-soluble organic solvent (D) is a solvent containing:

(D1) a low-boiling lowly viscous alcohol having not more than 3 carbon atoms;
(D2) a low-boiling highly viscous alcohol selected from the group consisting of t-butanol, n-butanol and 2-butanol; and
(D3) a high-boiling organic solvent having a boiling point of 150˚C to 200˚C.

The components in the water-soluble organic solvent satisfy the following properties. The component (D1) satisfies the properties in that a boiling point is lower than 120˚C and a viscosity at 20˚C is not less than 0.5 centipoises but is not more than 2.5 centipoises. The component (D2) satisfies the properties in that a boiling point is lower than 120˚C and a viscosity at 20˚C is not less than 2.5 centipoises but is not more than 4.5 centipoises. The component (D3) has a boiling point of 150˚C to 200˚C. The properties of these water-soluble organic solvents have been described in, for example, "A Handbook of Solvents, Shozo Asahara et al., Kodansha Co., Scientific, 1976".

In the present invention, the water-soluble organic solvent (D) having the above features is used at a specific ratio relative to the water (C) , and the obtained coating composition makes it possible to form an excellent hard coat layer. That is, the obtained coating composition makes it possible to form the hard coat layer having an increased thickness so as to possess excellent scratch resistance. Moreover, the obtained coating composition has good affinity to the resin substrate and is capable of forming the hard coat layer having good appearance.

Though the reasons for exhibiting these effects have not been clarified, it is considered that the use of two kinds of solvents having greatly different boiling points enables the water (C) and the water-soluble organic solvent (D) to be suitably volatilized at the time when the hard coat layer is formed, making it possible to form the flat and homogeneous hard coat layer. It is, therefore, desired that a difference in the boiling point is not less than 50˚C between the low-boiling lowly viscous alcohol (D1) or the low-boiling highly viscous alcohol (D2) having a boiling point of lower than 120˚C and the high-boiling organic solvent (D3) having a boiling point of not lower than 150˚C but lower than 200˚C. Specifically, it is desired that the low-boiling lowly viscous alcohol (D1) and the low-boiling highly viscous alcohol (D2) both have boiling points of lower than 100˚C.

Further, though the reasons have not been clarified, if use is made of alkylene glycol monoalkyl ethers or, concretely, ethylene glycol monomethyl ether, ethylene glycol monoethyl ether, propylene glycol monomethyl ether and propylene glycol monoethyl ether having boiling point of not lower than 120˚C but lower than 150˚C, the obtained coating composition tends to possess decreased storage stability and is not desirable. The storage stability in this case stands for defective appearance (cloudiness) of the obtained hard coat layer. The cloudiness is considered to stem from the aggregation of the fine particulate composite metal oxide (A). To maintain the fine particulate composite metal oxide (A) favorably and stably dispersed, it is desired to use a lower alcohol having a hydroxyl group. The alkylene glycol monoalkyl ethers have a hydroxyl group but are presumed to be not suited for stably dispersing the fine particulate composite metal oxide (A) since they have an ether skeleton. Therefore, it is better not to use the alkylene glycol monoalkyl ethers even for the high-boiling organic solvent (D3) that will be described later.

On account of the foregoing reasons, it is necessary that the water-soluble organic solvent (D) comprises the components (D1), (D2) and (D3). However, the alkylene glycol monoalkyl ethers or the water-soluble organic solvents other than the components (D1), (D2) and (D3) may be contained in amounts by which the effects of the present invention are not impaired. Concretely, the water-soluble organic solvents other than the above components may be contained in amounts of, preferably, not more than 10 parts by mass and, more preferably, not more than 5 parts by mass per 100 parts by mass of the total amount of the components (D1), (D2) and (D3).

The total amount of the low-boiling lowly viscous alcohol (D1), low-boiling highly viscous alcohol (D2) and high-boiling organic solvent (D3) may be such that the amounts of each of the components satisfy the mass ratio to the water (C) as will be described below in detail. As the absolute amount, however, it is desired that the total amount thereof is 100 to 300 parts by mass with the total amount of the fine particulate composite oxide (A) and the hydrolyzed product (B’) as 100 parts by mass.

<(D1) Low-boiling lowly viscous alcohol>

The low-boiling lowly viscous alcohol (D1) is an alcohol having not more than 3 carbon atoms, a boiling point of lower than 120˚C and a viscosity at 20˚C of not less than 0.5 centipoises but not more than 2.5 centipoises. As described above, it is desired that a difference in the boiling point is great from that of the high-boiling water-soluble organic solvent (D3) that will be described later. It is, therefore, desired that the low-boiling lowly viscous alcohol (D1) has a boiling point of not lower than 60˚C but lower than 100˚C.
Concrete examples of the low-boiling lowly viscous alcohol (D1) include methanol, ethanol, isopropanol and n-propanol. Among them, it is desired to use methanol, ethanol and isopropanol from the standpoint of dispersion stability of the fine particulate composite metal oxide (A) and wettability of the coating composition onto the optical substrate such as plastic lens. These alcohols may be used in one kind or in two or more kinds in combination.

<Content of the low-boiling lowly viscous alcohol (D1)>

It is considered that the low-boiling lowly viscous alcohol (D1) plays the role of improving dispersion of the fine particulate composite metal oxide (A) in the obtained coating composition. Besides, due to a difference in the boiling point from the high-boiling organic solvent (D3) that will be described later, it is considered that the solutions in the obtained coating composition volatilize gradually and a flat and homogeneous hard coat layer is formed. It is, therefore, particularly desired that the low-boiling lowly viscous alcohol (D1) that is used is an alcohol having a boiling point lower than that of water and in this case, it is considered that the above action is exhibited more conspicuously. Owing to the low-boiling lowly viscous alcohol (D1) that is contained, the fine particulate composite metal oxide (A) favorably disperses in the coating composition, and the hard coat layer exhibiting excellent effects is formed.

To attain the above object, the content of the low-boiling lowly viscous alcohol (D1) should be such that the mass ratio (D1/C) thereof to the water (C) is 1.80 to 7.00 and, more preferably, 1.90 to 6.50. As will be described later, the above ratio of contents is not the same as the ratio of feeding amounts at the time of producing the coating composition. This is because the low-boiling lowly viscous alcohol (D1) is formed by the hydrolysis of the hydrolyzable organosilicon compound (B) upon reacting with water (C). In the present invention, when the content of the low-boiling lowly viscous alcohol (D1) inclusive of the newly formed low-boiling lowly viscous alcohol (D1) is set to lie in the above-mentioned range, the hard coat layer having excellent properties can be formed from the obtained coating composition.

The content of the low-boiling lowly viscous alcohol (D1) in the coating composition can be found by analyzing the coating composition by gas chromatography (GC), finding the mass of the alcohol by using a calibration curve, and calculating the mass ratio thereof to the water. Concretely, use is made of the 6890 Series GC System manufactured by Agilent Co. {column: HP-1 [Crosslinked Methyl Siloxane (30 m x 0.32 mm x 0.25 μm) manufactured by Heulet Packard Co.}. As for the analytical pattern, the coating composition is maintained at 60˚C for 5 minutes and is, thereafter, heated up to 300˚C at a rate of 10˚C/min. First, the sensitivity ratio of the low-boiling lowly viscous alcohol is measured by using the 1,4-dioxane as an internal standard and the ethylene glycol monoisopropyl ether as a diluent. Next, the 1,4-dioxane and ethylene glycol monoisoproyl ether are added to the obtained coating composition, a peak area of the low-boiling lowly viscous alcohol is corrected based on a peak area ratio of the 1,4-dioxane, and the amount of the alcohol in the coating composition is determined from the sensitivity ratio of the low-boiling lowly viscous alcohol examined above.

<(D2) Low-boiling highly viscous alcohol>

The low-boiling highly viscous alcohol (D2) is a butanol compound selected from the group consisting of t-butanol, n-butanol and 2-butanol. These butanols have boiling points of lower than 120˚C and viscosities at 20˚C of not less than 2.5 centipoises but not more than 4.5 centipoises. As described above, a great difference is desired in the boiling point from the high-boiling organic solvent (D3) that will be described later. It is, therefore, desired that the low-boiling highly viscous alcohol (D2) has a boiling point of not lower than 60˚C but lower than 100˚C. If the solvent has a viscosity at 20˚C of not more than 2.5 centipoises, the hard coat layer cannot be thickly formed, which is not desirable. On the other hand, the solvent having a boiling point of lower than 120˚C and a viscosity at 20˚C of not less than 4.5 centipoises is not easily available. Even if it were available, it is considered that thickly forming the hard coat layer will be impaired. Among the above butanol compounds, the t-butanol is desired from the standpoint of such advantages as its compatibility with other water-soluble organic solvents and water (C), and its low boiling point and high viscosity.

<Content of the low-boiling highly viscous alcohol (D2)>

It is considered that the low-boiling highly viscous alcohol (D2) exhibits the same action as the low-boiling lowly viscous alcohol (D1) from the standpoint of boiling point but is considered to be specifically contributing to thickly forming the hard coat layer. With the low-boiling highly viscous alcohol being contained, the hard coat layer can be thickly formed.

Besides, with the lowly viscous alcohol (D1) being contained, it is considered that the hard coat layer is thickly formed with the fine particulate composite oxide (A) being favorably dispersed therein. As a result, it is considered that the obtained coating composition forms a dense and thick hard coat layer which exhibits such effects as scratch resistance and excellent appearance. However, if the low-boiling highly viscous alcohol (D2) is contained in too large amounts, the hard coat layer is formed rather thinly. If the content thereof is too small, on the other hand, such phenomena as repelling, etc. occur causing the appearance to become defective, which is not desirable.

Therefore, the content of the low-boiling highly viscous alcohol (D2) should be such that the mass ratio (D2/C) thereof to the water (C) is 0.24 to 2.50. By taking the thickness of the hard coat layer and preventing the appearance from becoming defective into account, in particular, the mass ratio (D2/C) thereof to the water (C) is, preferably, 0.24 to 2.20, more preferably, 0.24 to 1.60 and, particularly preferably, 0.30 to 1.50. The above ratio of contents is not the same as the ratio of feeding amounts at the time of producing the coating composition. This is because the water is consumed as the hydrolyzable organosilicon compound (B) reacts with the water (C). The content of the low-boiling highly viscous alcohol (D2) in the coating composition can be found by analyzing the coating composition by gas chromatograhy, finding the mass of the alcohol by using a calibration curve, and calculating a mass ratio thereof to the water. The conditions of analysis of GC are the same as the conditions for the low-boiling lowly viscous alcohol.

<(D3) High-boiling organic solvent>

The high-boiling organic solvent (D3) is a medium having a boiling point of not lower than 150˚C but lower than 200˚C. It is considered that with the boiling point satisfying the above range, the hard coat layer can be easily formed. The high-boiling organic solvent (D3) may be a known water-soluble organic solvent. Concrete examples thereof include esters such as methyl acetoacetate, ethyl acetoacetate and ethyl lactate; ketones such as acetonylacetone and diacetone alcohol; and diols such as 1,2-butanediol, 1,2-propanediol and 1,2-ethanediol. Among them, it is desired to use those other than the alkyl glycol alkyl ethers as described above from the standpoint of storage stability of the obtained coating composition. From the standpoint of thickly forming the hard coat layer, further, it is desired to use the diacetone alcohol. Though there is no particular limitation, it is desired that the high-boiling organic solvent (D3) has a viscosity at 20˚C of not less than 2.5 centipoises but not more than 4.5 centipoises if it satisfies the above requirement of high boiling point.

<Content of the high-boiling organic solvent (D3)>

With the high-boiling organic solvent (D3) being contained, it is considered that the obtained coating composition contains the solvent having a boiling point higher than that of water (C), the solvent in the coating composition volatilizes over a wide temperature range, and a flat and homogeneous hard coat layer is formed. Further, the high-boiling organic solvent has a relatively high viscosity and is considered to favorably act in thickly forming the hard coat layer.
The content of the high-boiling water-soluble organic solvent (D3) is such that the mass ratio (D3/C) thereof to the water (C) is 1.10 to 4.40. If the content of the high-boiling water-soluble organic solvent (D3) is too small, the obtained hard coat layer exhibits defective appearance such as interference fringes and, though the reason is not yet clear, its storage stability tends to decrease. If the content thereof is too large, on the other hand, it becomes difficult to thickly form the hard coat layer. Accordingly, the content of the high-boiling organic solvent (D3) should be such that the mass ratio (D3/C) thereof to the water (C) is, preferably, 1.10 to 4.00, more preferably, 1.20 to 3.50 and, further preferably, 1.40 to 3.00. The above ratio of contents is not the same as the ratio of feeding amounts at the time of producing the coating composition. This is because the water is consumed as the hydrolyzable organic silicon compound (B) reacts with the water (C). The content of the high-boiling organic solvent (D3) in the coating composition can be found by analyzing the coating composition by gas chromatography, finding the mass of the alcohol by using a calibration curve, and calculating a mass ratio thereof to the water. The conditions of analysis of GC are the same as the conditions for the low-boiling lowly viscous alcohol.

<(E) Curing catalyst>

In the coating composition of the present invention, any known catalyst can be used without limitation as the curing catalyst (E). Concrete examples thereof include acetylacetonato complexes with Li(I), Cu(II), Zn(II), Co(II), Ni(II), Be(II), Ce(III), Ta(III), Ti(III), Mn(II), La(III), Cr(III), V(III), Co(III), Fe(III), Al(III), Ce(IV), Zr(IV) and V(IV) as central metal atoms; perchloric acids such as perchloric acid, magnesium perchlorate, aluminum perchlorate, zinc perchlorate and ammonium perchlorate; organometal salts such as sodium acetate, zinc naphthenate, cobalt naphthenate and zinc octylate; and Lewis acids such as stannic chloride, aluminum chloride, ferric chloride, titanium chloride, zinc chloride and antimony chloride. These curing catalysts may be used in one kind or in two or more kinds in combination. Among them, by taking the solubility in the coating composition, storage stability of the coating composition and scratch resistance of the hard coat layer into consideration, it is desired to use acetylacetonate complexes with Al(III), Fe(III) and Li (I) as

central metals and, particularly desirably, to use a tris(2,4-pentanedionato)aluminum (III) with Al(III) as a central metal.

<Content of the curing catalyst (E)>

It is desired that the content of the curing catalyst (E) is 1.0 to 5.0 parts by mass per 100 parts by mass of the total amount of the fine particulate composite metal oxide (A) and the hydrolyzable organosilicon compound (B). With the content of the curing catalyst (E) satisfying this range, the formed hard coat layer possesses improved scratch resistance which is also advantageous in economy. By taking the scratch resistance of the hard coat layer and economy thereof into consideration, the content of the curing catalyst (E) is, preferably, 1.2 to 4.0 parts by mass and, more preferably, 2. 0 to 3.8 parts by mass. The mass of the curing catalyst in the coating composition is the same as the feeding amount thereof. Therefore, the content of the curing catalyst (E) can be calculated from the feeding amount thereof.

<Other additives>

As required, the components other than the above essential components can be added to the coating composition of the present invention. For example, there can be added surfactant such as silicone type surfactant, antistatic agent, ultraviolet ray absorber, antioxidant, dispersion dye, oil-soluble dye, fluorescent dye, pigment, photochromic compound, hindered amine and hindered phenol. These additives may be used in one kind or in two or more kinds in combination. Addition of these additives helps improve the applicability of the coating composition and the properties of the coating after cured.
Among the other additives, specifically, it is desired to add a cerium oxide. Addition of the cerium oxide improves the durability of the formed hard coat layer. Though there is no particular limitation, the content of the cerium oxide is, preferably, 1.0 to 10.0 parts by mass and, particularly preferably, 2.0 to 7.0 parts by mass per 100 parts by mass of the total amount of the fine particulate composite metal oxide (A) and the hydrolyzed product (B').

<Process for producing the coating composition>

Next, described below is a process for producing the coating composition of the present invention.
The coating composition of the invention described above in detail can be produced by the process described below.
The process for producing a coating composition by providing:

(A) a fine particulate composite metal oxide;
(B) a hydrolyzable organosilicon compound containing an organosilicon compound (B1) having an epoxy group and a hydrolyzable group;
(C) water;
(D) a water-soluble organic solvent; and
(E) a curing catalyst;

and forming a hydrolyzed product (B') of the hydrolyzable organosilicon compound (B) in a step of mixing the above components;
wherein (D1) a low-boiling lowly viscous alcohol having not more than 3 carbon atoms, (D2) a low-boiling highly viscous alcohol selected from the group consisting of t-butanol, n-butanol and 2-butanol, and (D3) a high-boiling organic solvent having a boiling point of 150˚C to 200˚C, are used in combination as the water-soluble organic solvent (D); and
the components (A), (B), (C), (D) and (E) are used in such amounts that per 100 parts by mass of the total amount of the fine particulate composite oxide (A) and the hydrolizable organosilicon compound (B):

the fine particulate composite oxide (A) is fed in an amount of 20.0 parts by mass to 60.0 parts by mass, the water (C) is fed in an amount of 20.0 to 70.0 parts by mass, and the curing catalyst (E) is fed in an amount of 0.9 to 5.0 parts by mass;
the feeding mass ratio (D1/C) of the low-boiling lowly viscous alcohol (D1) to the water (C) being 0.55 to 3.00;
the feeding mass ratio (D2/C) of the low-boiling highly viscous alcohol (D2) to the water (C) being 0.18 to 1.80; and
the feeding mass ratio (D3/C) of the high-boiling organic solvent (D3) to the water (C) being 0.70 to 2.70.

Upon setting the feeding amounts of the components as described above, the coating composition of the present invention can be easily produced. The feeding amounts of the components will now be described. Here, as described already in the paragraphs of the components that constitute the coating composition, some of the components are consumed or are formed in the steps of hydrolysis and condensation, and their amounts undergo variation. In the

following description, therefore, the amounts are those at the time of feeding and so far as these amounts are satisfied, the coating composition of the invention can be obtained.

<Amount of feeding the fine particulate composite metal oxide (A)>

The fine particulate composite oxide (A) used in the production process of the invention is the same as the one described in the paragraph of the coating composition.
The fine particulate composite metal oxide (A) is fed in an amount of 20.0 to 60.0 parts by mass per 100 parts by mass of the total amount (A + B) thereof and the hydrolyzable oranosilicon compound component (B) that will be described later. If the amount of feeding the fine particulate composite metal oxide is less than 20.0 parts by mass, the obtained coating composition does not satisfy the specified range (described above) of the content of the fine particulate composite metal oxide (A), and the formed hard coat layer fails to exhibit sufficiently large scratch resistance and refractive index, which is not desirable. If the amount thereof exceeds 60.0 parts by mass, too, the above-specified range is not satisfied, the coating composition has decreased storage stability and the hard coat layer tends to be cracked, which is not desirable. By taking the properties of the obtained hard coat layer, prevention of cracks and storage stability of the coating composition into consideration, the amount of feeding the fine articulate composite oxide (A) is, preferably, 25.0 to 60.0 parts by mass, more preferably, 30.0 to 60.0 parts by mass, and particularly preferably, 30.0 to 55.0 parts by mass.

<Amount of feeding the hydrolyzable organosilicon compound (B) >

The hydrolyzable organosilicon compound (B) used in the production process of the present invention is the same as the one described in the paragraph of the coating composition.
The amount of feeding the hydrolyzable organosilicon compound (B) is 40.0 to 80.0 parts by mass per 100 parts by mass of the total amount (A + B) thereof and the fine particulate composite oxide (A). If the amount of blending the hydrolyzable organosilicon compound (B) is less than 40.0 parts by mass, the obtained coating composition does not satisfy the specified range (described above) of the content of the fine particulate composite metal oxide (A), and the formed hard coat layer tends to be cracked. If the amount thereof exceeds 80. 0 parts by mass, too, the above-specified range is not satisfied, the formed hard coat layer tends to have decreased scratch resistance and decreased refractive index. By taking the properties of the formed hard coat layer and cracks thereof into consideration, the amount of feeding the hydrolyzable organsilicon compound (B) is, preferably, 35.0 to 70.0 parts by mass, more preferably, 40.0 to 65.0 parts by mass, and particularly preferably, 47.0 to 65.0 parts by mass.

As for the amount of feeding the hydrolyzable organosilicon compound (B), if the hydrolyzable organosilicon compound (B) contains the epoxy group-containing organosilicon compound (B1) only, then the amount of the organosilicon compound (B) that is fed becomes equal to the amount of the epoxy group-containing organosilicon compound (B1) that is fed. If the organosilicon compound (B) contains the epoxy group-containing organosilicon compound (B1) and other organosilicon compound such as polyvalent decomposable group-containing organosilicon compound (B2), the amount of the organosilicon compound (B) that is fed becomes equal to the total amount of the epoxy group-containing organosilicon compound (B1) and the polyvalent decomposable group-containing organosilicon compound (B2).
Further, when the polyvalent decomposable group-containing organosilicon compound (B2) is used, the feeding mass ratio (B1/B2) thereof with the epoxy group-containing organosilicon compound (B1) is, preferably, 0.30 to 10.00, more preferably, 1.50 to 6.00 and, particularly preferably, 2.00 to 5.00 as described above from the standpoint of scratch resistance and storage stability of the obtained hard coat layer. As described above, further, it is desired that the hydrolyzable organosilicon compound (B) comprises the epoxy group-containing organosilicon compound (B1) and the polyvalent decomposable group-containing organosilicon compound (B2).

<Amount of feeding water (C)>

In the production process of the present invention, water (C) is fed in an amount of 20.0 to 70.0 parts by mass per 100 parts by mass of the total amount of the fine particulate composite metal oxide (A) and the hydrolyzable organosilicon compound (B). If the amount of feeding water (C) is less than 20.0 parts by mass, the obtained coating composition does not satisfy the specified range (described above) of mass ratio of the water (C) and the water-soluble organic solvent (D). Therefore, the coating composition has decreased storage stability and the formed hard coat layer has decreased scratch resistance. Further, the hydrolyzable organosilicon compound (B) is not sufficiently hydrolyzed, and the hard coat layer exhibits defective appearance. If the amount of feeding the water (C) exceeds 70.0 parts by mass, too, the above-specified range is not satisfied, and the formed hard coat layer becomes cloudy. By taking the storage stability and the appearance and scratch resistance of the formed hard coat layer into consideration, the water is fed in an amount of, more desirably, 25.0 to 70.0 parts by mass.

In the process for producing the coating composition of the present invention, when the fine particulate composite

metal oxide (A) is used in the form of a colloidal dispersion solution using water as a dispersion medium, the amount of water (C) must be so adjusted as to satisfy the above-mentioned amount of feeding by taking the amount of water contained in the dispersion solution into consideration. For example, if the amount of water contained in the dispersion solution fails to satisfy the above-mentioned range, then water must be added. Further, if no water is contained in the dispersion solution, then water must be added so as to satisfy the above-mentioned range.

<Amount of feeding the water-soluble organic solvent (D)>

The production process of the present invention uses (D1) the low-boiling lowly viscous alcohol having not more than 3 carbon atoms; (D2) the low-boiling highly viscous alcohol selected from the group consisting of t-butanol, n-butanol and 2-butanol; and (D3) the high-boiling organic solvent having a boiling point of 150˚C to 200˚C.
If any one of the solvents constituting the above water-soluble organic solvent (D) is the same as the dispersion medium of the fine particulate composite metal oxide (A), the amount of feeding is determined by taking the amount thereof into consideration. Further, the amount of feeding the water-soluble organic solvents that will be described later and, particularly, the amount of feeding the low-boiling lowly viscous alcohol (D1) does not include the amount of alcohol that is formed when the hydrolyzable organosilicon compound (B) is hydrolyzed, but is simply the amount of feeding when the organosilicon compound (B) has not been hydrolyzed.
There is no particular limitation on the amount of feeding the water-soluble organic solvent (D) provided the feeding mass ratios of the low-boiling lowly viscous alcohol (D1), low-boiling highly viscous alcohol (D2) and high-boiling organic solvent (D3) to the water (C) that will be described later, are satisfied. However, the absolute amount of feeding is desirably 100 to 200 parts by mass per 100 parts by mass of the total amount of the fine particulate composite metal oxide (A) and the hydrolyzable Organosilicon compound (B).

<Amount of feeding the low-boiling lowly viscous alcohol (D1)>

The low-boiling lowly viscous alcohol used in the production process of the present invention is the same as the one described in the paragraph of the coating composition.
The amount of feeding the low-boiling lowly viscous alcohol (D1) is such that the feeding mass ratio (D1/C) thereof to the water (C) that is fed is 0. 55 to 3.00 and, more preferably, 0.60 to 2.85. The feeding mass ratio is not the same as the ratio of content in the obtained coating composition. This is because, as described above, the low-boiling lowly viscous alcohol (D1) is formed as the hydrolyzable organosilicon compound (B) is hydrolyzed upon reacting with water. In the production process of the present invention, the above feeding amount is determined by taking the low-boiling lowly viscous alcohol (D1) that is formed into consideration. So far as the feeding amount is satisfied, the content of the low-boiling lowly viscous alcohol (D1) in the coating composition is satisfied, and the obtained coating composition forms the hard coat layer having excellent properties.

<Amount of feeding the low-boiling highly viscous alcohol (D2) >

The low-boiling highly viscous alcohol (D2) used in the production process of the present invention is the same as the one described in the paragraph of the coating composition.
The amount of feeding the low-boiling highly viscous alcohol (D2) is such that the feeding mass ratio (D2/C) thereof to the water (C) that is fed is 0.18 to 1.80. Upon satisfying the feeding mass ratio, the content of the low-boiling highly viscous alcohol (D2) in the obtained coating composition satisfies the above-specified range to exhibit excellent effects. Here, the feeding mass ratio is not the same as the ratio of content in the obtained coating composition. This is because, as described above, water is consumed as the hydrolyzable organosilicon compound (B) reacts with water. By taking into consideration the thickness of the formed hard coat layer and prevention of defective appearance, the amount of feeding the low-boiling highly viscous alcohol (D2) is such that the feeding mass ratio (D2/C) thereof to the water (C) that is fed is, preferably, 0.18 to 1. 30, more preferably, 0.18 to 1. 00 and, particularly preferably, 0.20 to 0.80.

<Amount of feeding the high-boiling organic solvent (D3)>

The high-boiling organic solvent (D3) used in the production process of the present invention is the same as the one described in the paragraph of the coating composition.
The amount of feeding the high-boiling organic solvent (D3) is such that the feeding mass ratio (D3/C) thereof to the water (C) that is fed is 0.70 to 2.70. Upon satisfying the feeding mass ratio, the content of the high-boiling organic solvent (D3) in the obtained coating composition satisfies the above-specified range to exhibit excellent effects.
If the amount of feeding the high-boiling water-soluble organic solvent (D3) is too small, the obtained hard coat layer exhibits defective appearance such as interference fringes and besides, though the reason is not clear, the storage

stability tends to decrease. If the amount thereof is too large, on the other hand, it becomes difficult to thickly form the hard coat layer. Therefore, the amount of feeding the high-boiling water-soluble organic solvent (D3) is such that the feeding mass ratio (D3/C) thereof to the water (C) that is fed is, preferably, 0.80 to 2.60, more preferably, 0.90 to 2.40 and, particularly preferably, 0.95 to 2.10. Here, the feeding mass ratio is not the same as the ratio of content in the obtained coating composition. This is because, water is consumed as the hydrolyzable organosilicon compound (B) reacts with water.

<Amount of feeding the curing catalyst (E)>

The curing catalyst (E) used in the production process of the present invention is the same as the one described in the paragraph of the coating composition.
The amount of feeding the curing catalyst (E) is 0.9 to 5.0 parts by mass per 100 parts by mass of the total amount of the fine particulate composite metal oxide (A) and the hydrolyzable Organosilicon compound (B). Upon satisfying the feeding mass ratio, the obtained coating composition satisfies the specified range (described above) of the content of the curing catalyst (E) to exhibit excellent effects. If the amount of feeding the curing catalyst (E) is less than 0.9 parts by mass, the scratch resistance of the hard coat layer is not sufficient. If the amount thereof exceeds 5.0 parts by mass, on the other hand, the effect of the addition is not exhibited despite the amount is further increased, which is not desirable in economy. If the scratch resistance and economy are taken into consideration, the amount is, preferably, 1.0 to 3. 5 parts by mass and, more preferably, 1.5 to 3.0 parts by mass.

<Amounts of feeding other additives>

In the production process of the present invention, the above-mentioned other additives can be added at the time of feeding. Among other additives, it is desired to add a cerium oxide. The cerium oxide is fed in an amount of, preferably, 0.25 to 10.0 parts by mass and, particularly preferably, 0.5 to 5.0 parts by mass per 100 parts by mass of the total amount of the fine particulate composite metal oxide (A) and the hydrolyzable organosilicon compound (B).

<Method of mixing the components>

In the production process of the present invention, the coating composition is produced by mixing together the fine particulate composite metal oxide (A), hydrolyzable organosilicon compound (B), water (C), water-soluble organic solvent (D), curing catalyst (E) and other components that are to be added as required, by a known method such as stirring and mixing. If closely described, the hydrolyzed product (B') is formed by hydrolyzing the hydrolyzable organosilicon compound (B) in the step of mixing the components.
In the production process of the invention, it is desired that the hydrolyzable organosilicon compound (B) is hydrolyzed in the absence of the composite metal oxide (A) to form the hydrolyzed product (B') of the hydrolyzable organosilicon compound (B) and, thereafter, the composite metal oxide (A) is mixed therein. Specifically, it is desired to mix the fine particulate composite metal oxide (A) after the hydrolyzable organosilicon compound (B) and the curing catalyst (E) have been mixed. In this case, the water-soluble organic solvent (D) and water (C) may be added to either the mixture of the hydrolyzable organosilicon compound (B) and the curing catalyst (E) or to the fine particulate composite metal oxide (A).
Described below is a particularly preferred mixing method. First, the hydrolyzable organosilicon compound (B), low-boiling highly viscous alcohol (D2) and high-boiling organic solvent (D3) are mixed together. Next, water (C) to which acid has been added as required, is added and mixed and, thereafter, the curing catalyst (E) is added and mixed. Further, the fine particulate composite metal oxide (A) dispersed in the low-boiling lowly viscous alcohol (D1) is added and mixed.
The time for mixing the above components has no specific limitation and may be suitably determined depending upon the mixing conditions. Particularly, when mixed according to the above preferred mixing method, it is desired that the hydrolyzable organosilicon compound (B) is sufficiently hydrolyzed and, thereafter, the curing catalyst (E) and the fine particulate composite metal oxide (A) are mixed therein. More concretely, first, water (C) to which acid has been added as required is added to a solution of the mixture of the hydrolyzable organosilicon compound (B), low-boiling highly viscous alcohol (D2) and high-boiling organic solvent (D3), and the stirring and mixing are conducted for a period of time until the hydrolyzable organosilicon compound (B) is sufficiently hydrolyzed. The time until the hydrolyzable organosilicon compound (B) is sufficiently hydrolyzed can be discerned by measuring by gas chromatography the amount of alcohol formed from the hydrolyzable organosilicon compound (B) after water (C) has been added and by confirming that there is no change in the amount of the alcohol and there is no difference in the measured value from the amount of alcohol theoretically found from the hydrolyzable organosilicon compound (B) that is added. Through the above confirmation, it can be regarded that the hydrolysis of the hydrolyzable organosilicon compound (B) has finished. With the hydrolyzable organosilicon compound (B) being sufficiently hydrolyzed, the formed hard coat layer is less clouded.

The mixing time after water (C) has been added may be suitably determined depending upon the mixing conditions. Usually, it is desired to conduct the stirring and mixing for not less than 10 hours. Further, though the mixing time has no particular upper limit, the stirring and mixing will be sufficient if conducted for as long as 30 hours.

After the water (C) is added and mixed for the above period of time, the curing catalyst (E) is added and mixed and, further, the fine particulate composite metal oxide (A) is added, and the stirring and mixing are conducted for not less than 10 hours. Though there is no particular upper limit on the mixing time after the fine particulate composite metal oxide (A) has been added, the stirring and mixing will be sufficient if conducted for as long as 40 hours. With the mixing time set to lie in the above range after the fine particulate composite metal oxide (A) has been added, the homogeneous coating composition is obtained. There is no particular limitation, either, on the time for mixing by adding the other components, and the mixing may be conducted for about several minutes to about 5 hours.

There is no particular limitation, either, on the temperature at the time of mixing the components, and the components may be mixed in a temperature range of not lower than 10˚C but lower than 40˚C. Further, there is no particular limitation, either, on the mixing means, and a known means such as stirring/mixing means can be employed.

By mixing the components by the above method, the coating composition of the invention can be obtained. In the coating composition as described above, the hydrolyzable organosilicon compound (B) has been hydrolyzed and, therefore, the amount of the water-soluble organic solvent (D) becomes different from the above-mentioned amount that is fed. Namely, the obtained coating composition contains the alcohol that is formed by the hydrolysis of the hydrolyzable organosilicon compound (B). Therefore, though dependent upon the hydrolyzable organosilicon compound (B) that is used, the amount of the low-boiling lowly viscous alcohol (D1), in particular, becomes different from the amount that is fed in producing the coating composition. Further, water (C) is consumed when the hydrolyzable organosilicon compound (B) hydrolyzes and, therefore, the absolute amount of water (C) varies, too. Here, however, though dependent upon the hydrolyzable organosilicon compound (B) that is used, the amounts of the high-boiling organic solvent (D3) and the low-boiling highly viscous alcohol (D2) do not basically vary. According to the present invention, the amounts of feeding the components at the time of producing the coating composition are determined by expecting a variation in the viscosity due to the hydrolysis of the hydrolyzable organosilicon compound (B), consumption of water (C) and formation of the low-boiling lowly viscous alcohol (D1). As a result, the obtained coating composition excels in storage stability and enables the very excellent hard coat layer to be formed. Described below next is a laminate having the hard coat layer formed by using the coating composition.

<Laminate>

There is no particular limitation on the substrate on which the coating composition of the invention is to be applied, and known optical members can be used, such as spectacle lenses and windowpanes of houses and automobiles. Specifically, spectacle lenses are preferred.

As spectacle lenses, concrete examples include spectacle lenses of resin substrates such as of (meth)acrylic resin, polycarbonate resin, allyl resin, thiourethane resin, urethane resin and thioepoxy resin, as well as spectacle lenses of glasses. Among them, the spectacle lenses of the former resin substrates can be particularly preferably used.

A laminate is produced by applying the coating composition onto the substrate, and forming the hard coat layer by curing the coating composition. The laminate excels in appearance, close adhesion between the hard coat layer and the resin substrate, and scratch resistance. Therefore, the laminate can be particularly preferably used as spectacle lenses of a resin substrate. The method of forming the hard coat layer can be a method which is the same as the method of forming the hard coat layer on a photochromic optical substrate that will be described below in detail.

The coating composition of the invention can be suitably applied when the resin substrate is a photochromic optical substrate, too. The photochromic optical substrate often turn yellow as the photochromic compound contained therein undergoes the deterioration. When the coating composition of the invention is used, however, the yellowing can be decreased. This applies particularly desirably when the photochromic optical substrate has on the surface thereof a photochromic coat layer comprising a cured body that contains a photochromic compound. Described below is a case where the coating composition of the invention is applied to the resin substrate that has the photochromic coat layer.

<Photochromic optical substrate: optical substrate having a photochromic coat layer>

Fig. 1 shows a sectional structure of a laminate 10 obtained by forming a hard coat layeron a photochromic optical substrate.

Between a resin substrate 1 and a photochromic coat layer 3, a primer layer 2 is suitably provided to enhance close adhesion of the two. Further, a reflection-preventing film 5 may be provided on a hard coat layer 4. Though simply shown in Fig. 1, the reflection-preventing film 5, usually, comprises a laminate of a plurality of inorganic thin films of dissimilar refractive indexes, and is formed by depositing thin films of metal oxides such as $SiO_2$, $TiO_2$ and $ZrO_2$ or by applying thin films of organic high molecular materials. Further, an impact-resistant primer such as an urethane primer may be

provided between the photochromic coat layer 3 and the hard coat layer 4. On the reflection-preventing film 5, further, there can be applied a working and a secondary treatment, such as antistatic treatment, water-repelling treatment and antifogging treatment. Further, though not diagramed, the hard coat layer 4 and the reflection-preventing film 5 will often be formed on the back surface of the resin substrate 1 depending on the cases.

In the present invention, the above hard coat layer 4 is formed by applying and curing the coating composition. When the hard coat layer 4 is to be formed on an ordinary resin substrate without photochromic property, the hard coat layer 4 is formed on the resin substrate having neither the photochromic coat layer 3 nor the primer coat layer 2; i.e., the hard coat layer 4 is formed directly on the spectacle lens.

As the resin substrate 1 in Fig. 1, the resins exemplified as the above spectacle lenses can be used without any limitation. Further, the spectacle lenses, usually, have curved surfaces and, in many cases, their convex surfaces are assuming curved complex shapes as a result of advanced optical design in recent years. According to the present invention, however, such spectacle lenses, too, can be used without any problem. The resin substrate 1 has a thickness that varies depending upon the use. For instance, though there is no particular limitation, the spectacle lenses have a thickness of about 1 to about 200 mm.

Various surface treatments may be effected on the surface of the resin substrate 1. Such surface treatments may include, for example, a chemical treatment using a basic aqueous solution or an acidic aqueous solution, a polishing treatment using a polishing agent, a plasma treatment using an atmospheric-pressure plasma and a low-pressure plasma, and a corona discharge treatment. The primer layer 2 for improving close adhesion to the photochromic coat layer 3 can be formed by using various known primer resins. From the standpoint of close adhesion to the photochromic coat layer 3, however, an urethane type primer resin is particularly preferably used. Though there is no particular limitation, the thickness of the primer layer 2 is, usually, 1 to 10 μm.

The hard coat layer 4 is formed on the photochromic coat layer 3 by applying and curing the coating composition of the invention. Upon covering the photochromic coat layer 2 with the hard coat layer 4, the scratch resistance and weather-proof property of the photochromic coat layer 3 can be improved.

The photochromic coat layer 3 is formed by applying and curing a curable composition (hereinafter called photochromic curable composition) containing a compound having photochromic property (photochromic compound) and a radically polymerizable monomer or a polymerization initiator. The photochromic coat layer 3, usually, has a thickness of about 5 to about 100 μm. With the photochromic optical substrate forming the photochromic coat layer 3, the photochromic property is imparted by the thin photochromic coat layer 3 unlike those formed by the imbibition method or the in-mass method. Therefore, the photochromic compound is contained at a high concentration in the photochromic coat layer 3. A problem of turning yellow tends to occur when the hard coat layer 4 is formed on the photochromic coat layer 3. When the hard coat layer 4 is formed by using the coating composition of the invention, however, yellowing can be effectively prevented.

As the above photochromic compound, a chromene compound can be preferably used to attain high photochromic property in the thin photochromic coat layer 3. In the present invention, known chromene compounds can be used. However, it is particularly desired to use the chromene compounds exemplified below from the standpoint of photochromic properties.

[Chemical 3]

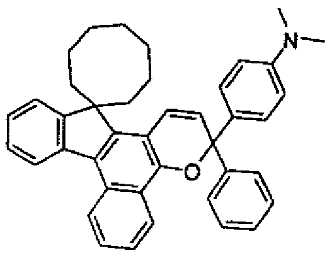
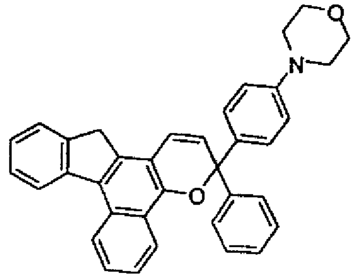
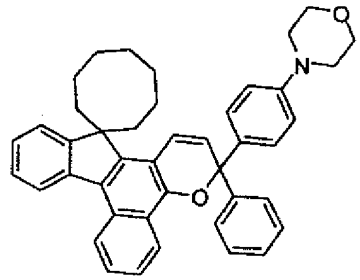

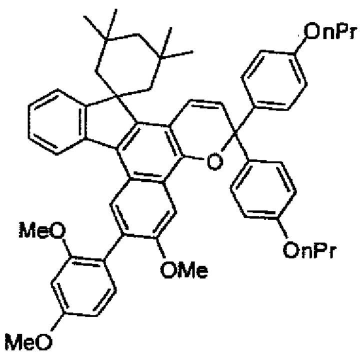
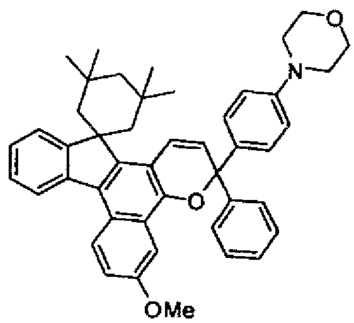
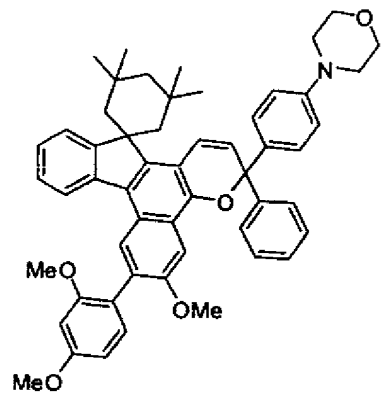

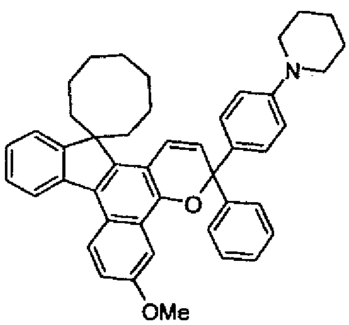
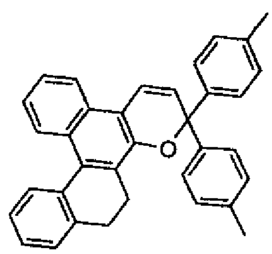
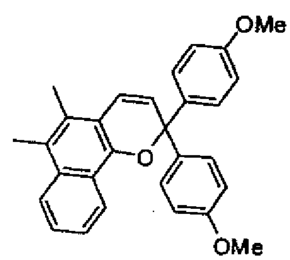

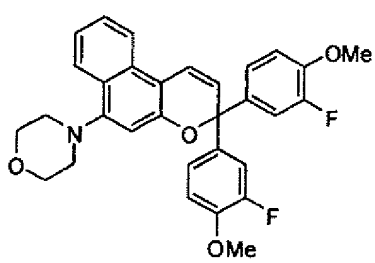
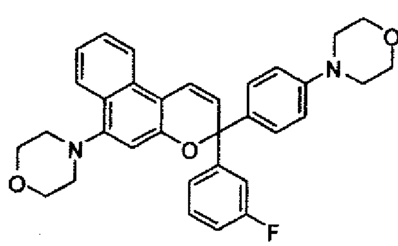
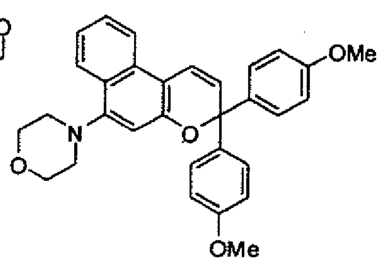

Among the photochromic compounds, the chromene type photochromic compounds are preferred because of their high light resistance and excellent color densities and fading rates. Among these chromene type photochromic

compounds, the compounds having molecular weights of not less than 540 are particularly preferred because of their particularly excellent color densities and fading rates. The photochromic compounds may be used in one kind or in two or more kinds being mixed together.

<Method of forming the photochromic coat layer3>

The photochromic coat layer 3 containing the above photochromic compound is formed by applying the photochromic curable composition containing the photochromic compound onto the resin substrate 1 or the primer coat layer 2, and curing it. As briefly described above, the photochromic curable composition is blended with a radically polymerizable monomer and a photopolymerization initiator in addition to the photochromic compound. Such photochromic curable compositions (coating agents) have been closely described in a patent document 7 (WO2003/011967) and a patent document 8 (JP-A-2003-342310). Further, to improve the light resistance of the photochromic compound, to improve the rate of developing color, to improve the fading rate and to improve the formability, there can be added additives such as silicone type or fluorine type surfactant (leveling agent), antioxidant, radical-trapping agent, ultraviolet ray stabilizer, ultraviolet ray absorber, parting agent, coloring-preventing agent, antistatic agent, fluorescent dye, dye, pigment, perfume, plasticizer and silane coupling agent. It is, further, desired to add a thermal polymerization initiator. It is desired that the additives that are suitably used are contained in amounts of 1 to 20 parts by mass and, particularly, 12 to 18 parts by mass per 100 parts by mass of the curable composition.
Further, the viscosity (25˚C) of the photochromic curable composition used for forming the photochromic coat layer 3 is 20 to 500 cps, preferably, 50 to 200 cps and, most preferably, 60 to 200 cps. With the viscosity of the photochromic curing composition lying in this range, the thickness of the photochromic coat layer 3 can be easily adjusted to as thick as 5 to 100 μm, and photochromic properties can be exhibited to a sufficient degree.
The photochromic curable composition can be applied by a known method without limitation, such as spin coating method, spray coating method, dip coating method or dip-spin coating method. In particular, the spin coating method is desired since it is capable of easily forming a homogeneous coat layer. Further, though there is no particular limitation on the method of curing the curable composition, it is desired to use a photochromic curable composition blended with a photopolymerization initiator and a thermal polymerization initiator, to cure it by the irradiation with ultraviolet rays and to heat it to complete the polymerization.
When cured by the irradiation with ultraviolet rays, a known source of light can be used without any limitation. Concrete examples of the source of light include ultrahigh pressure mercury lamp, high pressure mercury lamp, low pressure mercury lamp, xenon lamp, carbon arc, sterilizing lamp, metal halide lamp and electrodeless lamp. The time for irradiation by using the source of light may be suitably determined depending upon the kind of the photopolymerization initiator contained in the photochromic curable composition, absorption wavelength and sensitivity, or the thickness of the photochromic coat layer 3. Further, an electron ray can be used as the source of light. In this case, the photochromic coat layer 3 can be formed by curing the curable composition without adding photopolymerization initiator thereto. The curing by the irradiation with light or electron ray is capable of instantaneously forming the photochromic coat layer 3, and is advantageous from the standpoint of increasing the surface hardness and improving the scratch resistance.
The photochromic coat layer 3 formed as described above has a Vickers' hardness in a range of, generally, 0.3 to 10 $kg/mm^2$ and is relatively soft. To improve the scratch resistance, therefore, the hard coat layer 4 must be formed.

<Method of forming the hard coat layer 4>

The hard coat layer 4 is formed having a thickness of about 1.0 to 10.0 μm by applying the above coating composition of the invention and curing it. The coating composition is applied by a known method such as spin coating method, spray coating method, dip coating method or dip-spin coating method. The curing after the application is conducted using the dry air or by air-drying in the air, followed by an ordinary heat treatment. The heating temperature varies depending upon the substrate, but is not lower than 70˚C and, desirably, not lower than 80˚C to a temperature at which he substrate is not deformed and, generally, not higher than 110˚C. The curing time is roughly 1 to 2 hours at 90 to 110˚C. When the hard coat layer 4 is to be formed directly on the resin substrate 1 without having photochromic coat layer, too, the same method can be put into practice under the same conditions.
Use of the coating composition of the invention makes it possible to form the coat layer having a sufficient hardness and close adhesion to the substrate even if the curing temperature is lower and the curing time is shorter than those of the curing conditions of the prior art. The reason is considered to be as described below. That is, the coating composition of the invention contains excess of water relative to the hydrolyzable organosilicon compound (B), and it is considered that the organosilicon compound (B) is hydrolyzed to form the hydrolyzed product (B') thereby forming sufficient amounts of silanol groups necessary for forming the hard coat layer 4. As a result, the coating composition of the present invention can be applied even to the substrates having poor heat resistance. The hard coat layer 4 formed by being cured can acquire a thickness of about 1.0 to about 10.0 μm. The thickness of the hard coat layer for spectacle

lenses is, preferably, 1.0 to 5.0 μm. Specifically, if easiness of forming the hard coat layer and scratch resistance are taken into consideration, the thickness of the hard coat layer is, more preferably, 2.0 to 5.0 μm and, further preferably, 2.5 to 4.5 μm.

EXAMPLES

The invention will now be described in detail by way of Examples to which only, however, the invention is in no way limited. Further, combinations of features described in Examples are not necessarily all essential for the solution means of the invention. Described below are components and abbreviations of the lens substrates used in Examples and in Comparative Examples.

(1) Lens substrates.

CR: Allyl resin plastic lens, refractive index = 1.50.

MRA: Thiourethane resin plastic lens, refractive index = 1. 60.

MRB: Thiourethane resin plastic lens, refractive index = 1.67.

TE: Thioepoxy resin plastic lens, refractive index = 1.71.

(2) Components for the coating composition.

[Component A: fine particulate composite metal oxides]

SOL 1: Sol of fine particulate composite metal oxide containing 11.7% by mass of zirconium oxide, 77.6% by mass of tin oxide, 7.0% by mass of antimony oxide and 3.7% by mass of silicon dioxide dispersed in methanol. Solid component concentration (concentration of fine particulate composite metal oxide) of 40% by mass.

SOL 2: Sol of fine particulate composite metal oxide containing 11.7% by mass of zirconium oxide, 77.6% by mass of tin oxide, 7.0% by mass of antimony oxide and 3.7% by mass of silicon dioxide dispersed in a modified ethanol (ethanol/isopropyl alcohol/methanol at a mass ratio of 50.8/41.4/7.8). Solid component concentration of 30% by mass.

SOL 3: Sol of fine particulate composite metal oxide containing 56.6% by mass of titanium oxide, 17.7% by mass of zirconium oxide, 14.7% by mass of antimony pentoxide and 11.0% by mass of silicon dioxide dispersed in methanol. Solid component concentration of 30% by mass.

SOL 4: Sol of fine particulate composite metal oxide containing 30.0% by mass of titanium oxide, 36.6% by mass of tin oxide, 10.0% by mass of zirconium oxide, 6. 7% by mass of tungsten oxide, 10.0% by mass of antimony pentoxide and 6.7% by mass of silicon dioxide dispersed in methanol. Solid component concentration of 30% by mass.

SOL 5: Sol of fine particulate composite metal oxide containing 78.8% by mass of titanium oxide, 1.6% by mass of zirconium oxide and 19.6% by mass of silicon dioxide dispersed in methanol. Solid component concentration of 30% by mass.

[Component B: Hydrolyzable organosilicon compounds]

(B1) Organosilicon compound having an epoxy group and a hydrolyzable group.

GTS: γ-Glycidoxypropyltrimethoxysilane

GDS: γ-Glycidoxypropylmethyldimethoxysilane

(B2) Organosilicon compound containing a polyvalent decomposable group.

TEOS: Tetraethoxysilane

BSE: 1,2-Bis(triethoxysilyl)ethane

Other hydrolyzable organosilicon compounds.

DMDMOS: Dimethyldimethoxysilane

TMMOS: Trimethylmethoxysilane

MTES: Methyltriethoxysilane

[Component C: Water]

0.001 N to 1 N Aqueous solution of hydrochloric acid

[Component D: Water-soluble organic solvents]

(D1) Low-boiling lowly viscous alcohol having not more than 3 carbon atoms.

MeOH: Methanol (boiling point: 64.5˚C, viscosity at 20˚C: 0.59 centipoises)

EtOH: Ethanol (boiling point: 78.3˚C, viscosity at 20˚C: 1.17 centipoises)

IPA: Isopropanol (boiling point: 82.4˚C, viscosity at 20˚C: 2.43 centipoises)

(D2) Low-boiling highly viscous alcohol.

TBA: t-Butanol (boiling point: 82.5˚C, viscosity at 20˚C: 3.35 centipoises)
2BA: 2-Butanol (boiling point: 99.5˚C, viscosity at 20˚C: 4.21 centipoises)
nBA: n-Butanol (boiling point: 117.7˚C, viscosity at 20˚C: 2.95 centipoises)
(D3) High-boiling organic solvents.
DAA: Diacetone alcohol (boiling point: 168.1˚C, viscosity at 20˚C: 2.9 centipoises)
BDO: 1,2-Butanediol (boiling point: 190˚C)
PDO: 1,2-Propanediol (boiling point: 187˚C)
EDO: 1,2-Ethanediol (boiling point: 197˚C)

[Component E: Curing catalysts]

E1: Tris(2,4-pentanedionato)aluminum(III)
E2: Ammonium perchlorate

[Other component: Surfactant]
SiL1: Silicone type surfactant (trade name "L-7001" manufactured by Toray-Dow Coning Co.)
In Examples and Comparative Examples, the laminates were evaluated by the methods described below.

(1) Evaluating the laminates.

In the following Examples and Comparative Examples, hard coat layers were formed on the surfaces of the ordinary plastic lenses by using the obtained coating compositions, and were evaluated for their appearance, steel wool scratch resistance, Bayer scratch resistance and close adhesion. The lenses were prepared each in a number of 10 pieces for evaluation. The appearance and steel wool scratch resistance were the results of the lenses that were evaluated to be the worst, while the Bayer scratch resistance and close adhesion were average values of 10 pieces of each of the lenses.

(2) Appearance.

Presence of cracks in the hard coat layer, repelling pattern in the coat layer and transparency of the coat layer were observed by the eye.

○: Transparent and no crack was recognized.
X: There was recognized any one or more of cracks, repelling pattern, interference fringes and opaqueness (cloudiness) of the coat layer.

(3) Steel wool scratch resistance.

By using a steel wool (Bonstar #0000 manufactured by Nihon Steel Wool Co.) while applying a load of 1 kg, the surface of a lens (surface of the hard coat layer) was rubbed 10 round trips, and the scratched degree was evaluated by the eye. The evaluation was on the following basis.

A: Was not almost scratched (less than 5 scratch lines as viewed by the eye).
B: Scratched only a little (not less than 5 but less than 10 scratch lines as viewed by the eye).
C: Scratched a little (not less than 10 but less than 20 scratch lines as viewed by the eye).
D: Scratched obviously (not less than 20 scratch lines as viewed by the eye).
E: Hard coat layer was removed.

(4) Bayer scratch resistance (measuring the Bayer value).

In compliance with the Bayer's testing method (ASTM D-4060 or ASTM F735-81), the surfaces of the lens substrates (non-coated lenses) on which no hard coat layer has been formed and the surfaces of the hard coat layers formed on the lens substrates (surfaces of the hard-coated lenses) were scratched by a method described below.
That is the non-coated lens and the hard-coated lens were put into a polishing agent holder having two ϕ 50 mm holes from the lower side of the holes with their convex surfaces facing upward. Next, 500 g of a polishing agent available in the market (polishing agent comprising alumina/zirconia manufactured by SAINT-GOBAIN CERAMIC MATERIALS CANADA INC. ) was introduced into the polishing agent holder and in this state, the two lenses put therein were vibrated at a frequency of 150 strokes a minute for a total of 2 minutes maintaining a stroke of 4 inches to scratch the surfaces

of the two lenses by polishing. Next, by using a spectrometer (Hazeometer manufactured by Suga Shikenki Co. ) , the lenses were measured for their haze, a difference in the haze value was found before the lenses were scratched and after the lenses were scratched, and the Bayer values were calculated according to the following formula.

$$\text{Bayer value} = \triangle\text{Haze (non-coated)}/\triangle\text{Haze (hard-coated)}$$

where ΔHaze (non-coated) is a value of the non-coated lens obtained by subtradting the haze value of before the test from the haze value of after the test, and ΔHaze (hard-coated) is a value of the hard-coated lens obtained by subtracting the haze value of before the test from the haze value of after the test.
The larger the value, the higher the surface hardness and the more excellent the scratch resistance. Usually, a hardness is attained if the value is not less than 4, and the hardness becomes comparable to that of a glass if the value is not less than 6, i.e., very excellent scratch resistance is attained.

(5) Close adhesion.

Close adhesion between the hard coat layer and the lens was evaluated by the cross-cut tape test in compliance with the JIS D-0202. That is, by using a cutter knife, the surface of the hard coat layer was incised maintaining a gap of about 1 mm to form 100 squares. An adhesive cellophane tape (trade name: Cellotape, manufactured by Nichiban Co.) was strongly stuck thereon, and was pulled and removed at one time in a direction of 90˚ relative to the surface, and the squares of the hard coat layer still remaining were counted. The evaluated results were expressed as the (remaining number of squares)/100.

(6) Storage stability.

Hard coat layers were formed by using the coating compositions after they were preserved at 15˚C for 2 weeks, 1 month, 1.5 months and 2 months. The coatings were evaluated for their properties described above by using laminates thereof. Tables show the longest terms until the Bayer scratch resistance/close adhesion deteriorates by more than 10%, the steel wool scratch resistance is evaluated to have decreased, or the appearance becomes defective (appearance is evaluated to be X) as compared to when the initial coating composition is used. For example, what is described as 1.5 months in Table means that the coating composition after stored for 1.5 months maintained properties but the coating composition after stored for 2 months possessed deteriorated properties. Further, what is described as 2 months means that even after stored for 2 months, none of the properties were deteriorated and the appearance did not become defective, either.

(7) QUV test.

A QUV test was conducted to evaluate the weather-proof property of the obtained coating compositions. The test was conducted by using the QUV/spray manufactured by Q-PANEL LAB PRODUCTS Co., by irradiating a laminate on which the hard coat layer has been formed with light of 340 nm having an intensity of 0.89 W/cm$^2$ at 60˚C for 8 hours and, thereafter, leaving the laminate at 50˚C for 4 hours so that the dew was condensed on the hard coat layer of the laminate (water droplets were adhered to the hard coat layer). With the above cycle as one cycle, the close adhesion was tested for every 4 cycles {4 cycles (48 hours), 8 cycles (96 hours), 12 cycles (144 hours) and 16 cycles (192 hours}. Tables show the longest times satisfying the square number of 100/100 (longest time in which none of the squares were removed). For example, what is written as 96 hours means that the hard coat layer was not removed up to 8 cycles but was removed in the test after 12 cycles. What is written as 192 hours means that the hard coat layer was not removed in the close adhesion test even after 16 cycles.

Example 1.

(Preparation of a coating composition)

44.6 Parts by mass of a γ-glycidoxypropyltrimethoxysilane, 13.5 parts by mass of a tetraethoxysilane, 0.14 parts by mass of a silicone type surfactant (trade name "L-7001": SiL1 manufactured by Toray-Dow Coning Co.), 17.7 parts by mass of t-butanol and 58.5 parts by mass of diacetone alcohol were mixed together. While sufficiently stirring the solution, 44.7 parts by mass of a 0.017 N aqueous solution of hydrochloric acid was added thereto and after the addition has been finished, the stirring was continued at 15 to 30˚C for 20 hours. Next, 2.8 parts by mass of a tris(2,4-pentanedionato)aluminum(III) was added thereto and was, thereafter, stirred at 20 to 25˚C for 1 hour. 104.7 Parts by mass of the fine particulate composite metal oxide dispersed in methanol (SOL 1)(41.9 arts by mass of the fine particulate composite metal oxide and 62.8 parts by mass of methanol) was mixed therein and was stirred for 24 hours to obtain a coating composition 1 of the present invention. The composition of feeding and the feeding amounts were as shown in Table 1, and the feeding amount ratio of the components and the feeding mass ratio of the water-soluble organic solvent and the water were as shown in Table 5. Further, the contents of the components in the coating composition calculated from the feeding amounts of the components were as shown in Table 6. Further, the mass of water in the obtained coating composition was found by the Karl Fischer's method, the mass of the water-soluble organic solvent was found by gas chromatography, and the mass ratio thereof was as shown in Table 6. The mass ratio of water and the water-soluble organic solvent was nearly equal to the mass ratio calculated from the feeding amounts, and it was confirmed that the hydrolyzable organosilicon compound was hydrolyzed in whole amount. The obtained coating composition 1 was evaluated for its storage stability. The result was as shown in Table 9.

(Preparation of laminates)

A resin substrate (lens substrate) CR having a thickness of about 2 mm and of which both surfaces were forming convex surfaces was dipped in an aqueous solution of 60˚C containing 10% by weight of sodium hydroxide, and was etched with an alkali for 10 minutes by using an ultrasonic wave washing device. After etched with the alkali, the resin substrate was washed with distilled water and hot water of 50˚C to remove the remaining alkali component and was, thereafter, dried at room temperature for 2 hours. The lens substrate was dip-coated with the coating composition at 25˚C and at a pull-up rate of 30 cm/min. Thereafter, the resin substrate was pre-cured in an oven heated at 70˚C and was, thereafter, cured at 90˚C for 2 hours to obtain a laminate (hard-coated lens) having a hard coat layer of a thickness of 3.2 μm formed on both surfaces of the resin substrate (lens substrate) CR.

(Evaluating the laminate)

The laminate (hard-coated lens) was evaluated for its appearance, steel wool scratch resistance, Bayer scratch resistance and close adhesion to learn that the appearance was ○, steel wool scratch resistance was A, Bayer scratch resistance (Bayer value) was 6.2, and close adhesion was 100/100. The results were as shown in Table 9.

Examples 2 to 4.

Laminates (hard-coated lenses) were prepared by the same method as that of Example 1 by using the above coating composition 1 but changing the resin substrates (lens substrates) , and were evaluated. The results were as shown in Table 9.

Examples 5 to 33.

(Preparation of coating compositions 2 to 30)

Coating compositions 2 to 30 were prepared by the same method as the one for preparing the coating composition 1 but using fine particulate composite metal oxides, organosilicon compounds, water-soluble organic solvents, curing catalysts, aqueous solutions used for hydrolyzing the organosilicon compounds, and surfactants shown in Tables 1 to 3. Feeding mass ratios of the coating compositions were as shown in Table 5, and contents of the components were as shown in Table 6.

(Preparation of laminates, evaluation of laminates)

Hard coat layers were formed on the surfaces of the resin substrates (lens substrates) by the same coating method as that of Example 1 but using the above coating compositions 2 to 30, and were evaluated for their properties. Tables 9 and 10 show the results thereof together with the thicknesses of the hard coat layers.

Comparative Examples 1 to 8.

(Preparation of comparative coating compositions 1 to 8)

Comparative coating compositions 1 to 8 were prepared by the same method as that of preparing the coating composition 1 but using fine particulate composite metal oxides, organosilicon compounds, solvents, curing catalysts,

aqueous solutions used for hydrolyzing the organosilane compounds and surfactants shown in Table 4. The feeding mass ratios of the comparative coating compositions and the contents of the components were as shown in Table 8. Here, the solvents in the comparative coating composition 8 described in Table 4 were as follows:

EGPE: Ethylene glycol monoisopropyl ether (boiling point: 140˚C)
MCS: Methyl cellosolve (boiling point: 125˚C)
ECS: Ethyl cellosolve (boiling point: 136˚C)

(Preparation of laminates, evaluation of laminates)

Hard coat layerswere formed on the surfaces of the resin substrates (lens substrates) by the same coating method as that of Example 1 but using the comparative coating compositions 1 to 8, and were evaluated for their properties. Table 10 shows the results thereof together with the thicknesses of the hard coat layers.

Table 1

| Coating composition No. | Fine particulate composite metal oxide (A), pts by mass* | Hydrolyzable organosilicon compound (B), pts by mass | Water-soluble organic solvent (D) | | |
|---|---|---|---|---|---|
| | | | (D1) pts by mass | (D2) pts by mass | (D3) pts by mass |
| Composition 1 | SOL1 41.9 | GTS/TEOS 44.6/13.5 | MeOH 62.8 | TBA 17.7 | DAA 58.5 |
| Composition 2 | SOL1 24.7 | GTS/TEOS 57.9/17.4 | MeOH 37.1 | TBA 16.2 | DAA 53.5 |
| Composition 3 | SOL1 28.9 | GTS/TEOS 54.6/16.5 | MeOH 43.4 | TBA 16.5 | DAA 54.7 |
| Composition 4 | SOL1 53.1 | GTS/TEOS 36.0/10.9 | MeOH 79.7 | TBA 18.7 | DAA 61.8 |
| Composition 5 | SOL1 58.8 | GTS/TEOS 31.6/9.6 | MeOH 88.1 | TBA 19.2 | DAA 63.5 |
| Composition 6 | SOL1 41.9 | GTS/TEOS 44.6/13.5 | MeOH 62.8 | TBA 8.9 | DAA 58.5 |
| Composition 7 | SOL1 41.9 | GTS/TEOS 44.6/13.5 | MeOH 62.8 | TBA 11.2 | DAA 58.5 |
| Composition 8 | SOL1 41.9 | GTS/TEOS 44.6/13.5 | MeOH 62.8 | TBA 49.1 | DAA 58.5 |
| Composition 9 | SOL1 41.9 | GTS/TEOS 44.6/13.5 | MeOH 62.8 | TBA 67.0 | DAA 58.5 |
| Composition 10 | SOL1 41.9 | GTS/TEOS 44.6/13.5 | MeOH 62.8 | TBA 17.7 | DAA 44.7 |
| Composition 11 | SOL1 41.9 | GTS/TEOS 44.6/13.5 | MeOH 62.8 | TBA 17.7 | DAA 67.0 |

* Parts by mass of the fine particulate composite oxide.

Table 1 (continued)

| Coating composition No. | Water (C) acid aqueous solution pts by mass | Curing catalyst (E), pts by mass | Surfactant, pts by mass |
|---|---|---|---|
| Composition 1 | 0.017N 44.7 | E1 2.8 | SiL1 0.14 |
| Composition 2 | 0.017N 57.8 | E1 2.5 | SiL1 0.13 |
| Composition 3 | 0.017N 54.6 | E1 2.6 | SiL1 0.13 |
| Composition 4 | 0.017N 36.0 | E1 2.9 | SiL1 0.15 |
| Composition 5 | 0.017N 31.7 | E1 3.0 | SiL1 0.16 |
| Composition 6 | 0.017N 44.7 | E1 2.8 | SiL1 0.14 |
| Composition 7 | 0.017N 44.7 | E1 2.8 | SiL1 0.14 |
| Composition 8 | 0.017N 44.7 | E1 2.8 | SiL1 0.14 |
| Composition 9 | 0.017N 44.7 | E1 2.8 | SiL1 0.14 |
| Composition 10 | 0.017N 44.7 | E1 2.8 | SiL1 0.14 |
| Composition 11 | 0.017N 44.7 | E1 2.8 | SiL1 0.14 |

Table 2

| Coating composition No. | Fine particulate composite metal oxide (A), pts by mass* | Hydrolyzable organosilicon compound (B), pts by mass | Water-soluble organic solvent (D) | | |
|---|---|---|---|---|---|
| | | | (D1) pts by mass | (D2) pts by mass | (D3) pts by mass |
| Composition 12 | SOL1 41.9 | GTS/TEOS 44.6/13.5 | MeOH 62.8 | TBA 17.7 | DAA 89.3 |
| Composition 13 | SOL1 41.9 | GTS/TEOS 44.6/13.5 | MeOH 62.8 | TBA 17.7 | DAA 111.6 |
| Composition 14 | SOL1 41.9 | GTS/TEOS 44.6/13.5 | MeOH 62.8 | TBA 17.7 | DAA 58.5 |
| Composition 15 | SOL1 41.9 | GTS/TEOS 44.6/13.5 | MeOH 62.8 | TBA 17.7 | DAA 58.5 |
| Composition 16 | SOL1 41.9 | GTS/TEOS 44.6/13.5 | MeOH 62.8 | TBA 17.7 | DAA 58.5 |
| Composition 17 | SOL1 41.9 | GTS/TEOS 44.6/13.5 | MeOH 62.8 | TBA 17.7 | DAA 58.5 |
| Composition 18 | SOL1 41.9 | GTS/TEOS 44.6/13.5 | MeOH 62.8 | TBA 17.7 | DAA 58.5 |
| Composition 19 | SOL1 41.9 | GTS/TEOS 44.6/13.5 | MeOH 62.8 | TBA 17.7 | DAA 58.5 |
| Composition 20 | SOL1 44.0 | GTS/TEOS 50.4/5.6 | MeOH 66.0 | TBA 18.6 | DAA 61.5 |

* Parts by mass of the fine particulate composite oxide.

Table 2 (continued)

| Coating composition No. | Water (C) acid aqueous solution pts by mass | Curing catalyst (E), pts by mass | Surfactant, pts by mass |
|---|---|---|---|
| Composition 12 | 0.017N<br>44.7 | E1<br>2.8 | SiL1<br>0.14 |
| Composition 13 | 0.017N<br>44.7 | E1<br>2.8 | SiL1<br>0.14 |
| Composition 14 | 0.025N<br>29.8 | E1<br>2.8 | SiL1<br>0.14 |
| Composition 15 | 0.014N<br>52.1 | E1<br>2.8 | SiL1<br>0.14 |
| Composition 16 | 0.017N<br>44.7 | E1<br>0.9 | SiL1<br>0.14 |
| Composition 17 | 0.017N<br>44.7 | E1<br>1.9 | SiL1<br>0.14 |
| Composition 18 | 0.017N<br>44.7 | E1<br>2.1 | SiL1<br>0.14 |
| Composition 19 | 0.017N<br>44.7 | E1<br>3.1 | SiL1<br>0.14 |
| Composition 20 | 0.017N<br>40.4 | E1<br>2.9 | SiL1<br>0.15 |

Table 3

| Coating composition No. | Fine particulate composite metal oxide (A), pts by mass* | Hydrolyzable organosilicon compound (B), pts by mass | Water-soluble organic solvent (D) | | |
|---|---|---|---|---|---|
| | | | (D1) pts by mass | (D2) pts by mass | (D3) pts by mass |
| Composition 21 | SOL1 43.2 | GTS/TEOS 48.5/8.3 | MeOH 64.9 | TBA 18.3 | DAA 60.5 |
| Composition 22 | SOL1 38.8 | GTS/TEOS 36.4/24.8 | MeOH 58.2 | TBA 16.4 | DAA 54.2 |
| Composition 23 | SOL1 33.8 | GTS/TEOS 22.9/43.3 | MeOH 50.7 | TBA 14.3 | DAA 47.3 |
| Composition 24 | SOL1 40.6 | TEOS/GDS/MTES/DMDMOS/TMMOS 13.0/8.8/20.4/10.0/7.2 | MeOH 60.9 | TBA 17.2 | DAA 56.7 |
| Composition 25 | SOL1 41.9 | GTS/TEOS 44.6/13.5 | MeOH 62.8 | 2BA 17.7 | DAA 58.5 |
| Composition 26 | SOL2 41.9 | GTS/TEOS 44.6/13.5 | MeOH/EtOH/IPA 7.9/49.6/40.4 | TBA 17.7 | DAA 58.5 |
| Composition 27 | SOL3 41.9 | GTS/TEOS 44.6/13.5 | MeOH 97.7 | TBA 17.7 | DAA 58.5 |
| Composition 28 | SOL4 41.9 | GTS/TEOS 44.6/13.5 | MeOH 97.7 | TBA 17.7 | DAA 58.5 |
| Composition 29 | SOL5 41.9 | GTS/TEOS 44.6/13.5 | MeOH 97.7 | TBA 17.7 | DAA 58.5 |
| Composition 30 | SOL1 41.9 | GTS/TEOS 44.6/13.5 | MeOH 62.8 | TBA 17.7 | DAA 58.5 |

* Parts by mass of the fine particulate composite oxide.

Table 3 (continued)

| Coating composition No. | Water (C) acid aqueous solution pts by mass | Curing catalyst (E), pts by mass | Surfactant, pts by mass |
|---|---|---|---|
| Composition 21 | 0.017N 41.9 | E1 2.9 | SiL1 0.15 |
| Composition 22 | 0.017N 50.8 | E1 2.6 | SiL1 0.13 |
| Composition 23 | 0.017N 60.7 | E1 2.2 | SiL1 0.12 |
| Composition 24 | 0.017N 49.1 | E1 2.7 | SiL1 0.14 |
| Composition 25 | 0.017N 44.7 | E1 2.8 | SiL1 0.14 |
| Composition 26 | 0.017N 44.7 | E1 2.8 | SiL1 0.14 |
| Composition 27 | 0.017N 44.7 | E1 2.8 | SiL1 0.14 |
| Composition 28 | 0.017N 44.7 | E1 2.8 | SiL1 0.14 |
| Composition 29 | 0.017N 44.7 | E1 2.8 | SiL1 0.14 |
| Composition 30 | 0.017N 44.7 | E2 0.9 | SiL1 0.14 |

Table 4

| Coating composition No. | Fine particulate composite metal oxide (A), pts by mass* | Hydrolyzable organosilicon compound (B), pts by mass | Water-soluble organic solvent (D) | | |
|---|---|---|---|---|---|
| | | | (D1) pts by mass | (D2) pts by mass | (D3) pts by mass |
| Comparative Composition 1 | SOL1 20.7 | GTS/TEOS 60.9/18.4 | MeOH 31.1 | TBA 15.8 | DAA 52.3 |
| Comparative Composition 2 | SOL1 41.9 | GTS/TEOS 44.6/13.5 | MeOH 62.8 | TBA 6.7 | DAA 58.5 |
| Comparative Composition 3 | SOL1 41.9 | GTS/TEOS 44.6/13.5 | MeOH 62.8 | TBA 89.3 | DAA 58.5 |
| Comparative Composition 4 | SOL1 41.9 | GTS/TEOS 44.6/13.5 | MeOH 62.8 | TBA 17.7 | DAA 30.4 |
| Comparative Composition 5 | SOL1 41.9 | GTS/TEOS 44.6/13.5 | MeOH 62.8 | TBA 17.7 | DAA 134.0 |
| Comparative Composition 6 | SOL1 41.9 | GTS/TEOS 44.6/13.5 | MeOH 62.8 | TBA 17.7 | DAA 58.5 |
| Comparative Composition 7 | SOL1 30.0 | GTS/TEOS 12.4/57.6 | MeOH 45.0 | TBA 12.7 | DAA 12.7 |
| Comparative Composition 8 | SOL1 41.9 | GTS/TEOS 44.6/13.5 | MeOH 62.8 | TBA 17.7 | EGPE/MCS/ECS ** 19.5/19.5/19.5 |

* Parts by mass of the fine particulate composite oxide.

** (D3) in the comparative composition 8 was a water-soluble organic solvent having a boiling point of not lower than 120°C but lower than 150°C.

Table 4 (continued)

| Coating composition No. | Water (C) acid aqueous solution pts by mass | Curing catalyst (E), pts by mass | Surfactant, pts by mass |
|---|---|---|---|
| Comparative Composition 1 | 0.017N 60.9 | E1 2.5 | SiL1 0.13 |
| Comparative Composition 2 | 0.017N 44.7 | E1 2.8 | SiL1 0.14 |
| Comparative Composition 3 | 0.017N 44.7 | E1 2.8 | SiL1 0.14 |
| Comparative Composition 4 | 0.017N 44.7 | E1 2.8 | SiL1 0.14 |
| Comparative Composition 5 | 0.017N 44.7 | E1 2.8 | SiL1 0.14 |
| Comparative Composition 6 | 0.045N 16.4 | E1 2.8 | SiL1 0.14 |
| Comparative Composition 7 | 0.017N 68.3 | E1 2.0 | SiL1 0.10 |
| Comparative Composition 8 | 0.017N 44.7 | E1 2.8 | SiL1 0.14 |

Table 5

| Coating composition No. | (A) pts by mass | (B) pts by mass | (C) pts by mass | Water-soluble organic solvent (D) | | | | (E) pts by mass |
|---|---|---|---|---|---|---|---|---|
| | | | | Feeding mass ratio D1/C | Feeding mass ratio D2/C | Feeding mass ratio D3/C | (D) Total pts by mass | |
| Composition 1 | 41.9 | 58.1 | 44.7 | 1.40 | 0.40 | 1.31 | 139.0 | 2.8 |
| Composition 2 | 24.7 | 75.3 | 57.8 | 0.64 | 0.28 | 0.93 | 106.7 | 2.5 |
| Composition 3 | 28.9 | 71.1 | 54.6 | 0.79 | 0.30 | 1.00 | 114.6 | 2.6 |
| Composition 4 | 53.1 | 46.9 | 36.0 | 2.21 | 0.52 | 1.72 | 160.2 | 2.9 |
| Composition 5 | 58.7 | 41.3 | 31.7 | 2.78 | 0.61 | 2.00 | 170.8 | 3.0 |
| Composition 6 | 41.9 | 58.1 | 44.7 | 1.40 | 0.20 | 1.31 | 130.2 | 2.8 |
| Composition 7 | 41.9 | 58.1 | 44.7 | 1.40 | 0.25 | 1.31 | 132.5 | 2.8 |
| Composition 8 | 41.9 | 58.1 | 44.7 | 1.40 | 1.10 | 1.31 | 170.4 | 2.8 |
| Composition 9 | 41.9 | 58.1 | 44.7 | 1.40 | 1.50 | 1.31 | 188.3 | 2.8 |
| Composition 10 | 41.9 | 58.1 | 44.7 | 1.40 | 0.40 | 1.00 | 125.1 | 2.8 |
| Composition 11 | 41.9 | 58.1 | 44.7 | 1.40 | 0.40 | 1.50 | 147.5 | 2.8 |
| Composition 12 | 41.9 | 58.1 | 44.7 | 1.40 | 0.40 | 2.00 | 169.8 | 2.8 |
| Composition 13 | 41.9 | 58.1 | 44.7 | 1.40 | 0.40 | 2.50 | 192.1 | 2.8 |
| Composition 14 | 41.9 | 58.1 | 29.8 | 2.11 | 0.59 | 1.96 | 139.0 | 2.8 |
| Composition 15 | 41.9 | 58.1 | 52.1 | 1.21 | 0.34 | 1.12 | 139.0 | 2.8 |
| Composition 16 | 41.9 | 58.1 | 44.7 | 1.40 | 0.40 | 1.31 | 139.0 | 0.9 |
| Composition 17 | 41.9 | 58.1 | 44.7 | 1.40 | 0.40 | 1.31 | 139.0 | 1.9 |
| Composition 18 | 41.9 | 58.1 | 44.7 | 1.40 | 0.40 | 1.31 | 139.0 | 2.1 |
| Composition 19 | 41.9 | 58.1 | 44.7 | 1.40 | 0.40 | 1.31 | 139.0 | 3.1 |
| Composition 20 | 44.0 | 56.0 | 40.4 | 1.63 | 0.46 | 1.52 | 146.0 | 2.9 |
| Composition 21 | 43.2 | 56.8 | 41.9 | 1.55 | 0.44 | 1.44 | 143.6 | 2.9 |
| Composition 22 | 38.8 | 61.2 | 50.8 | 1.15 | 0.32 | 1.07 | 128.8 | 2.6 |
| Composition 23 | 33.8 | 66.2 | 60.7 | 0.84 | 0.24 | 0.78 | 112.3 | 2.2 |
| Composition 24 | 40.6 | 59.4 | 49.1 | 1.24 | 0.35 | 1.15 | 134.8 | 2.7 |

(continued)

| Coating composition No. | (A) pts by mass | (B) pts by mass | (C) pts by mass | Water-soluble organic solvent (D) Feeding mass ratio D1/C | Feeding mass ratio D2/C | Feeding mass ratio D3/C | (D) Total pts by mass | (E) pts by mass |
|---|---|---|---|---|---|---|---|---|
| Composition 25 | 41.9 | 58.1 | 44.7 | 1.40 | 0.40 | 1.31 | 139.0 | 2.8 |
| Composition 26 | 41.9 | 58.1 | 44.7 | 2.19 | 0.40 | 1.31 | 173.9 | 2.8 |
| Composition 27 | 41.9 | 58.1 | 44.7 | 2.22 | 0.40 | 1.31 | 173.9 | 2.8 |
| Composition 28 | 41.9 | 58.1 | 44.7 | 2.22 | 0.40 | 1.31 | 173.9 | 2.8 |
| Composition 29 | 41.9 | 58.1 | 44.7 | 2.22 | 0.40 | 1.31 | 173.9 | 2.8 |
| Composition 30 | 41.9 | 58.1 | 44.7 | 1.40 | 0.40 | 1.31 | 139.0 | 0.9 |
| Feeding mass ratio of the components. | | | | | | | | |

Table 6

| Coating composition No. | (A) pts by mass | (B') pts by mass | (C) pts by mass | Water-soluble organic solvent (D) Feeding mass ratio D1/C | Feeding mass ratio D2/C | Feeding mass ratio D3/C | (D) Total pts by mass | (E) pts by mass |
|---|---|---|---|---|---|---|---|---|
| Composition 1 | 49.4 | 50.6 | 35.2 | 3.11 | 0.59 | 1.96 | 199.4 | 3.3 |
| Composition 2 | 30.7 | 69.3 | 48.0 | 1.97 | 0.42 | 1.39 | 181.4 | 3.1 |
| Composition 3 | 35.5 | 64.5 | 44.7 | 2.20 | 0.45 | 1.50 | 186.0 | 3.2 |
| Composition 4 | 60.5 | 39.5 | 27.3 | 4.33 | 0.78 | 2.58 | 210.3 | 3.4 |
| Composition 5 | 65.9 | 34.1 | 23.7 | 5.18 | 0.91 | 3.00 | 215.4 | 3.1 |
| Composition 6 | 49.4 | 50.6 | 35.2 | 3.11 | 0.30 | 1.96 | 189.0 | 3.3 |
| Composition 7 | 49.4 | 50.6 | 35.2 | 3.11 | 0.38 | 1.96 | 191.7 | 3.3 |
| Composition 8 | 49.4 | 50.6 | 35.2 | 3.11 | 1.65 | 1.96 | 236.4 | 3.3 |
| Composition 9 | 49.4 | 50.6 | 35.2 | 3.11 | 2.25 | 1.96 | 257.5 | 3.3 |
| Composition 10 | 49.4 | 50.6 | 35.2 | 3.11 | 0.59 | 1.50 | 183.1 | 3.3 |
| Composition 11 | 49.4 | 50.6 | 35.2 | 3.11 | 0.59 | 2.25 | 209.4 | 3.3 |
| Composition 12 | 49.4 | 50.6 | 35.2 | 3.11 | 0.59 | 2.99 | 235.7 | 3.3 |
| Composition 13 | 49.4 | 50.6 | 35.2 | 3.11 | 0.59 | 3.74 | 262.0 | 3.3 |

(continued)

| Coating composition No. | (A) pts by mass | (B') pts by mass | (C) pts by mass | Water-soluble organic solvent (D) Feeding mass ratio D1/C | Feeding mass ratio D2/C | Feeding mass ratio D3/C | (D) Total pts by mass | (E) pts by mass |
|---|---|---|---|---|---|---|---|---|
| Composition 14 | 49.4 | 50.6 | 17.6 | 6.22 | 1.19 | 3.92 | 199.4 | 3.3 |
| Composition 15 | 49.4 | 50.6 | 43.9 | 2.50 | 0.48 | 1.57 | 199.4 | 3.3 |
| Composition 16 | 49.4 | 50.6 | 35.2 | 3.11 | 0.59 | 1.96 | 199.4 | 1.1 |
| Composition 17 | 49.4 | 50.6 | 35.2 | 3.11 | 0.59 | 1.96 | 199.4 | 2.2 |
| Composition 18 | 49.4 | 50.6 | 35.2 | 3.11 | 0.59 | 1.96 | 199.4 | 2.5 |
| Composition 19 | 49.4 | 50.6 | 35.2 | 3.11 | 0.59 | 1.96 | 199.4 | 3.7 |
| Composition 20 | 50.0 | 50.0 | 30.6 | 3.40 | 0.69 | 2.28 | 194.9 | 3.3 |
| Composition 21 | 49.7 | 50.3 | 32.1 | 3.29 | 0.66 | 2.17 | 196.5 | 3.3 |
| Composition 22 | 48.4 | 41.6 | 42.3 | 2.80 | 0.48 | 1.60 | 206.5 | 3.2 |
| Composition 23 | 46.6 | 53.4 | 55.7 | 2.43 | 0.35 | 1.17 | 220.2 | 3.0 |
| Composition 24 | 51.4 | 48.6 | 41.5 | 3.00 | 0.53 | 1.73 | 218.1 | 3.4 |
| Composition 25 | 49.4 | 50.6 | 35.2 | 3.11 | 0.59 | 1.96 | 199.4 | 3.3 |
| Composition 26 | 49.4 | 50.6 | 35.2 | 2.63 | 0.59 | 1.96 | 182.3 | 3.3 |
| Composition 27 | 49.4 | 50.6 | 35.2 | 4.28 | 0.59 | 1.96 | 240.6 | 3.3 |
| Composition 28 | 49.4 | 50.6 | 35.2 | 4.28 | 0.59 | 1.96 | 240.6 | 3.3 |
| Composition 29 | 49.4 | 50.6 | 35.2 | 4.28 | 0.59 | 1.96 | 240.6 | 3.3 |
| Composition 30 | 49.4 | 50.6 | 35.2 | 3.11 | 0.59 | 1.96 | 199.4 | 1.1 |

Table 7

| Coating composition No. | (A) pts by mass | (B) pts by mass | (C) pts by mass | Water-soluble organic solvent (D) Feeding mass ratio D1/C | Feeding mass ratio D2/C | Feeding mass ratio D3/C | (D) Total pts by mass | (E) pts by mass |
|---|---|---|---|---|---|---|---|---|
| Comparative composition 1 | 20.7 | 79.3 | 60.9 | 0.51 | 0.26 | 0.86 | 99.2 | 2.5 |
| Comparative composition 2 | 41.9 | 58.1 | 44.7 | 1.40 | 0.15 | 1.31 | 128.0 | 2.8 |

(continued)

| Coating composition No. | (A) pts by mass | (B) pts by mass | (C) pts by mass | Water-soluble organic solvent (D) Feeding mass ratio D1/C | Feeding mass ratio D2/C | Feeding mass ratio D3/C | (D) Total pts by mass | (E) pts by mass |
|---|---|---|---|---|---|---|---|---|
| Comparative composition 3 | 41.9 | 58.1 | 44.7 | 1.40 | 2.00 | 1.31 | 210.6 | 2.8 |
| Comparative composition 4 | 41.9 | 58.1 | 44.7 | 1.40 | 0.40 | 0.68 | 110.8 | 2.8 |
| Comparative composition 5 | 41.9 | 58.1 | 44.7 | 1.40 | 0.40 | 3.00 | 214.4 | 2.8 |
| Comparative composition 6 | 41.9 | 58.1 | 16.4 | 3.83 | 1.08 | 3.57 | 139.0 | 2.8 |
| Comparative composition 7 | 30.0 | 70.0 | 68.3 | 0.66 | 0.19 | 0.19 | 99.6 | 2.8 |
| Comparative composition 8 | 41.9 | 58.1 | 44.7 | 1.40 | 0.40 | -* | 139.0 | 2.8 |

Feeding mass ratio of the components.
* Use was made of a solvent having a boiling point of not lower than 120˚C but lower than 150˚C.

Table 8

| Coating composition No. | (A) pts by mass | (B') pts by mass | (C) pts by mass | Water-soluble organic solvent (D) Feeding mass ratio D1/C | Feeding mass ratio D2/C | Feeding mass ratio D3/C | (D) Total pts by mass | (E) pts by mass |
|---|---|---|---|---|---|---|---|---|
| Comparative composition 1 | 26.1 | 73.9 | 51.2 | 1.78 | 0.39 | 1.29 | 177.0 | 3.2 |
| Comparative composition 2 | 49.4 | 50.6 | 35.2 | 3.11 | 0.22 | 1.96 | 186.4 | 3.3 |
| Comparative composition 3 | 49.4 | 50.6 | 35.2 | 3.11 | 2.99 | 1.96 | 283.8 | 3.3 |
| Comparative composition 4 | 49.4 | 50.6 | 35.2 | 3.11 | 0.59 | 1.02 | 166.3 | 3.3 |
| Comparative composition 5 | 49.4 | 50.6 | 35.2 | 3.11 | 0.59 | 4.49 | 288.4 | 3.3 |
| Comparative composition 6 | 49.4 | 50.6 | 1.80 | 61.03 | 11.63 | 38.44 | 199.4 | 3.3 |

(continued)

| Coating composition No. | (A) pts by mass | (B') pts by mass | (C) pts by mass | Water-soluble organic solvent (D) | | | (D) Total pts by mass | (E) pts by mass |
|---|---|---|---|---|---|---|---|---|
| | | | | Feeding mass ratio D1/C | Feeding mass ratio D2/C | Feeding mass ratio D3/C | | |
| Comparative composition 7 | 44.9 | 55.1 | 68.2 | 2.22 | 0.28 | 0.28 | 189.3 | 3.0 |
| Comparative composition 8 | 49.4 | 50.6 | 35.2 | 3.11 | 0.59 | -* | 199.4 | 3.3 |

* Use was made of a solvent having a boiling point of not lower than 120˚C but lower than 150˚C.

Table 9

| | Lens substrate | Coating composition | Properties of hard coating | | | | | | |
|---|---|---|---|---|---|---|---|---|---|
| | | | *1 | *2 | *3 | *4 | Close adhesion | QUV test, close adhesion | Storage stability |
| Ex. 1 | CR | Composition 1 | 3.3 | ○ | A | 6.2 | 100/100 | 192 hrs | 2 months |
| Ex. 2 | MRA | Composition 1 | 3.3 | ○ | A | 6.3 | 100/100 | 192 hrs | 2 months |
| Ex. 3 | MRB | Composition 1 | 3.3 | ○ | A | 6.1 | 100/100 | 192 hrs | 2 months |
| Ex. 4 | TE | Composition 1 | 3.3 | ○ | A | 6.2 | 100/100 | 192 hrs | 2 months |
| Ex. 5 | MRA | Composition 2 | 3.2 | ○ | A | 5.6 | 100/100 | 192 hrs | 2 months |
| Ex. 6 | MRA | Composition 3 | 3.2 | ○ | A | 5.8 | 100/100 | 192 hrs | 2 months |
| Ex. 7 | MRA | Composition 4 | 3.3 | ○ | A | 6.3 | 100/100 | 192 hrs | 2 months |
| Ex. 8 | MRA | Composition 5 | 3.3 | ○ | A | 6.5 | 100/100 | 192 hrs | 1.5 months (*5) |
| Ex. 9 | MRA | Composition 6 | 3.5 | ○ | A | 6.5 | 100/100 | 192 hrs | 2 months |
| Ex. 10 | MRA | Composition 7 | 3.2 | ○ | A | 6.3 | 100/100 | 192 hrs | 2 months |
| Ex. 11 | MRA | Composition 8 | 2.5 | ○ | A | 6.0 | 100/100 | 192 hrs | 2 months |
| Ex. 12 | MRA | Composition 9 | 2.0 | ○ | A | 5.7 | 100/100 | 192 hrs | 2 months |
| Ex. 13 | MRA | Composition 10 | 3.5 | ○ | A | 6.5 | 100/100 | 192 hrs | 2 months |
| Ex. 14 | MRA | Composition 11 | 3.0 | ○ | A | 6.3 | 100/100 | 192 hrs | 2 months |
| Ex. 15 | MRA | Composition 12 | 2.5 | ○ | A | 6.0 | 100/100 | 192 hrs | 2 months |
| Ex. 16 | MRA | Composition 13 | 2.0 | ○ | A | 5.7 | 100/100 | 192 hrs | 2 months |

(continued)

| | Lens substrate | Coating composition | Properties of hard coating | | | | | | |
|---|---|---|---|---|---|---|---|---|---|
| | | | *1 | *2 | *3 | *4 | Close adhesion | QUV test, close adhesion | Storage stability |
| Ex. 17 | MRA | Composition 14 | 3.3 | ○ | A | 6.2 | 100/100 | 192 hrs | 2 months |
| Ex. 18 | MRA | Composition 15 | 3.2 | ○ | A | 6.3 | 100/100 | 192 hrs | 2 months |
| Ex. 19 | MRA | Composition 16 | 3.2 | ○ | A | 4.7 | 100/100 | 192 hrs | 2 months |
| Ex. 20 | MRA | Composition 17 | 3.3 | ○ | A | 6.1 | 100/100 | 192 hrs | 2 months |
| Ex. 21 | MRA | Composition 18 | 3.2 | ○ | A | 6.3 | 100/100 | 192 hrs | 2 months |

*1: Thickness (μm)
*2: Appearance
*3: Steel wool scratch resistance
*4: Bayer scratch resistance

Table 10

| | Lens substrate | Coating composition | Properties of hard coating | | | | | | |
|---|---|---|---|---|---|---|---|---|---|
| | | | *1 | *2 | *3 | *4 | Close adhesion | QUV test, close adhesion | Storage stability |
| Ex. 22 | MRA | Composition 19 | 3.3 | ○ | A | 6.2 | 100/100 | 192 hrs | 2 months |
| Ex. 23 | MRA | Composition 20 | 3.2 | ○ | A | 5.0 | 100/100 | 192 hrs | 2 months |
| Ex. 24 | MRA | Composition 21 | 3.1 | ○ | A | 5.8 | 100/100 | 192 hrs | 2 months |
| Ex. 25 | MRA | Composition 22 | 3.2 | ○ | A | 6.2 | 100/100 | 192 hrs | 1.5 months (*5) |
| Ex. 26 | MRA | Composition 23 | 3.2 | ○ | A | 6.8 | 100/100 | 192 hrs | 1 months (*5) |
| Ex. 27 | MRA | Composition 24 | 3.1 | ○ | A | 5.3 | 100/100 | 192 hrs | 2 months |
| Ex. 28 | MRA | Composition 25 | 3.0 | ○ | A | 6.1 | 100/100 | 192 hrs | 2 months |
| Ex. 29 | MRA | Composition 26 | 2.8 | ○ | A | 6.0 | 100/100 | 192 hrs | 1.5 months (*5) |
| Ex. 30 | MRA | Composition 27 | 2.7 | ○ | A | 5.7 | 100/100 | 96 hrs | 2 months |
| Ex. 31 | MRA | Composition 28 | 2.7 | ○ | A | 5.7 | 100/100 | 96 hrs | 2 months |
| Ex. 32 | MRA | Composition 29 | 2.8 | ○ | A | 5.8 | 100/100 | 96 hrs | 2 months |
| Ex. 33 | MRA | Composition 30 | 3.0 | ○ | A | 6.7 | 100/100 | 192 hrs | 1 month (*6) |

(continued)

| | Lens substrate | Coating composition | Properties of hard coating | | | | | | |
|---|---|---|---|---|---|---|---|---|---|
| | | | *1 | *2 | *3 | *4 | Close adhesion | QUV test, close adhesion | Storage stability |
| Comp. Ex. 1 | MRA | Comparative composition 1 | 2.9 | ○ | A | 3.6 | 100/100 | 192 hrs | 1 month (*7) |
| Comp. Ex. 2 | MRA | Comparative composition 2 | 3.4 | ×(*5) | - | - | - | - | - |
| Comp. Ex. 3 | MRA | Comparative composition 3 | 1.7 | ○ | A | 4.1 | 100/100 | 192 hrs | 2 months |
| Comp. Ex. 4 | MRA | Comparative composition 4 | 3.5 | × (*6) | - | - | - | - | - |
| Comp. Ex. 5 | MRA | Comparative composition 5 | 1.7 | ○ | A | 4.2 | 100/100 | 192 hrs | 2 months |
| Comp. Ex. 6 | MRA | Comparative composition 6 | 2.3 | ○ | A | 4.3 | 100/100 | 96 hrs | *8 |
| Comp. Ex. 7 | MRA | Comparative composition 7 | 3.1 | ○ | - | - | - | - | - |
| Comp. Ex. 8 | MRA | Comparative composition 8 | 3.3 | ○ | A | 6.2 | 100/100 | 192 hrs | *9 |

*1: Thickness (μm) *4: Bayer scratch *7: scratch evaluation B
*2: Appearance resistance *8: after 2 weeks, scratch evaluation B
*3: Steel wool scratch *5: repelling *9: after 2 weeks, coating became cloudy resistance *6: interference fringes

Next, described below is an example in which a hard coat layer was formed on the resin substrate that was a photochromic optical substrate. The used components, abbreviations, preparation methods and evaluation methods were as described below.

(1) Primer components.
PR1: Moisture curing primer "Take-Seal PFR402TP-4" manufactured by Takebayashi Kagaku Kogyo Co.
PR2: Primer "Take-Rack WS-6321A" manufactured by Mitsui Kagaku Polyurethane Co.

(2) Components of a photochromic curable composition (components of a photochromic coat layer).
[Radically polymerizable monomers]
TMPT: Trimethylolpropane trimethacrylate
GMA: Glycidyl methacrylate
9GDA: Polyethylene glycol diacrylate (average molecular weight, 532)
BPEO: 2,2-Bis(4-acryloyloxypolyethylene glycol phenyl)propane (average molecular weight, 776)
14G: Polyethylene glycol #600 dimethacrylate
ABPE: Ethoxylated bisphenol A diacrylate
EB6A: Polyester oligomer hexaacrylate (EB 1830 manufactured by Dycel UCB Co.)
[Photopolymerization initiators]
CGI1870: A mixture of a 1-hydroxycyclohexylphenylketone and a bis(2,6-dimethoxybenzoyl)-2,4,4-trimethyl-pentyl phosphinoxide (weight ratio, 3:7)

CGI819: Bis(2,4,6-timethylbenzoyl)-phenylphosphinoxide
[Stabilizers]
LS765: Bis(1,2,2,6,6-pentamethyl-4-piperidyl)sebacate
IRG245: Ethylenebis(oxyethylene)bis[3-(5-tert-butyl-4-hydroxy-m-tolyl)propionate]
[Leveling agent]
SiL1: Silicone type surfactant, L7001, manufactured by Toray-Dow Coning Co.
[Silane coupling agent]
TSL: γ-Methacryloyloxypropyltrimethoxysilane
[Photochromic compounds]

PC1: Chromene compound of the following formula

[Chemical 4]

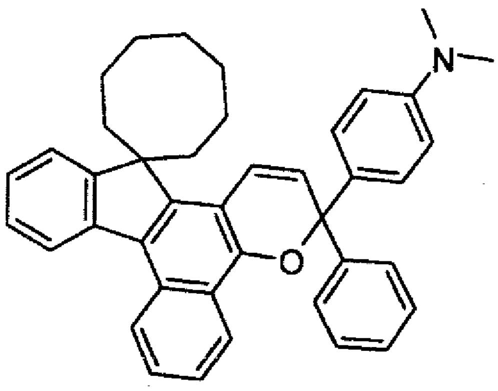

(PC1)

PC2: Chromene compound of the following formula

[Chemical 5]

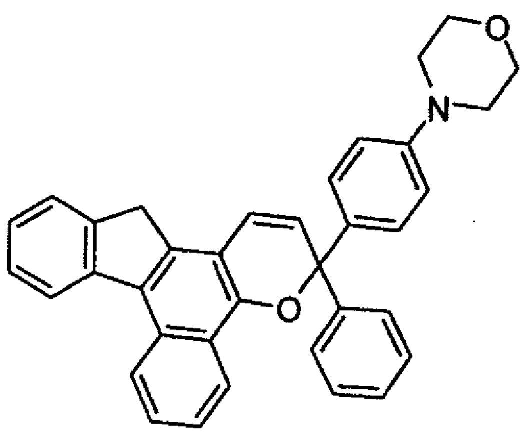

(PC2)

PC3: Chromene compound of the following formula

[Chemical 6]

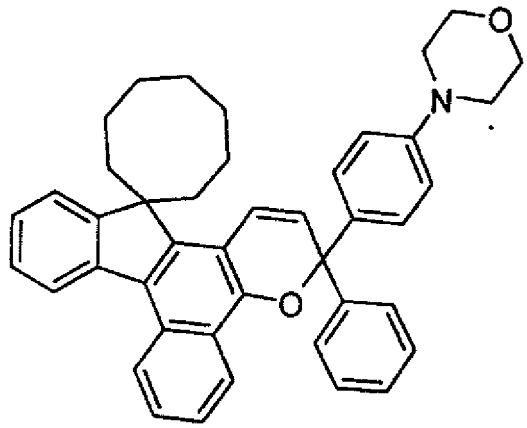

(PC3)

PC4: Chromene compound of the following formula

[Chemical 7]

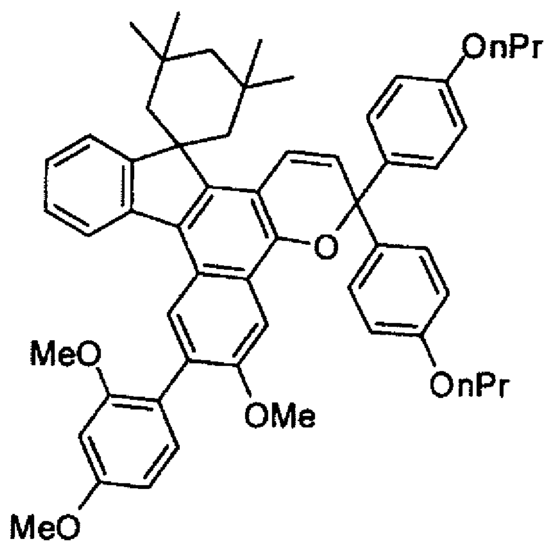

(PC4)

PC5: Chromene compound of the following formula

[Chemical 8]

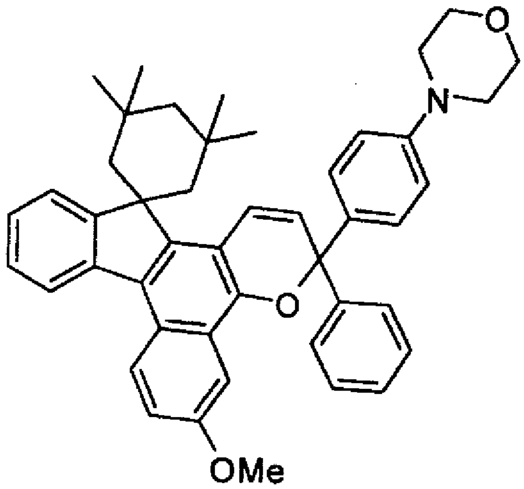

(PC5)

PC6: Chromene compound of the following formula

[Chemical 9]

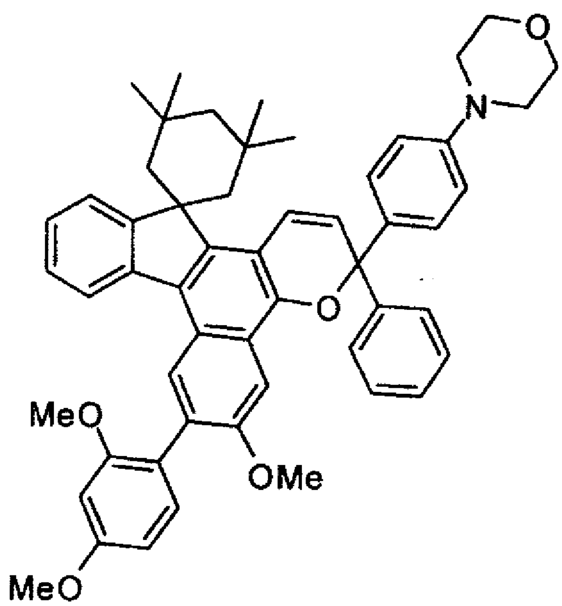

(PC6)

PC7: Chromene compound of the following formula

[Chemical 10]

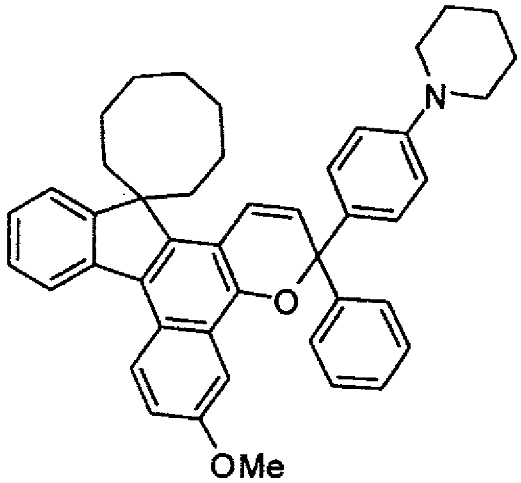

(PC7)

PC8: Chromene compound of the following formula

[Chemical 11]

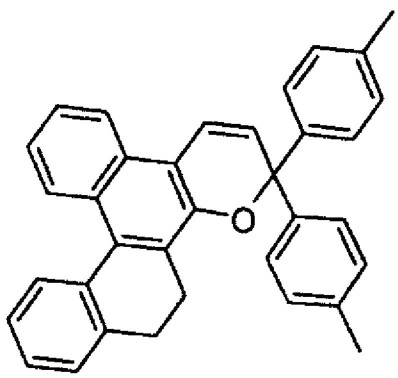

(PC8)

PC9: Chromene compound of the following formula

[Chemical 12]

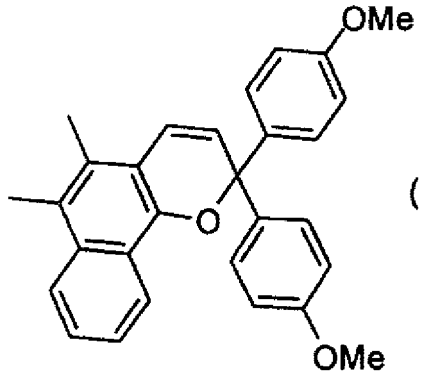

(PC9)

PC10: Chromene compound of the following formula

[Chemical 13]

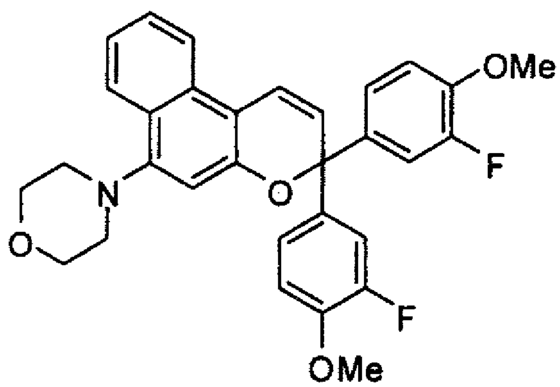

(PC10)

PC11: Chromene compound of the following formula

[Chemical 14]

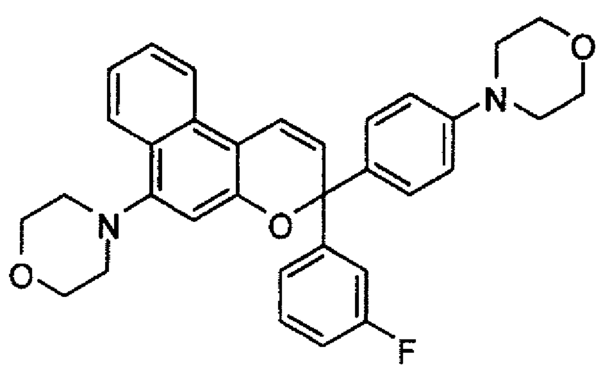

(PC11)

PC12: Chromene compound of the following formula

[Chemical 15]

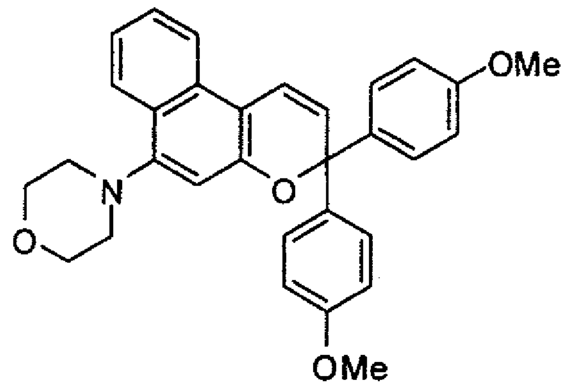

(PC12)

(Preparation of a photochromic curable composition [A])

A mixture of radically polymerizable monomers was prepared according to the following recipe. A photochromic compound {0.4 parts by mass of a chromene compound (PC1), 0.5 parts by mass of a chromene compound (PC2), 2.5 parts by mass of a chromene compound (PC3)} was added to 100 parts by mass of a mixture of radically polymerizable monomers (40 parts by mass of BPEO, 5 parts by mass of ABPE, 18 parts by mass of 9GDA, 30 parts by mass of TMPT, 5 parts by mass of 14G and 1 part by mass of GMA), and was dissolved by using ultrasonic waves at 70°C for 30 minutes. To the thus obtained composition were added 0.3 parts by mass of a photopolymerization initiator (CGI819), 5 parts by mass of a stabilizer (LS765), 3 parts by mass of a stabilizer (IRG245), 6 parts by mass of a silane coupling agent (TSL) and 0.1 part by mass of a leveling agent (SiL1), and were sufficiently mixed together to prepare a photochromic curable composition [A]. The ratios of blending were as shown in Table 11.

(Preparation of photochromic curable compositions [B to E])

Like the photochromic curable composition [A], photochromic curable compositions were obtained by using radically polymerizable monomers, chromene compounds, photopolymerization initiators, stabilizers, silane coupling agents and leveling agents. Blending ratios were as shown in Table 11.

Table 11

| Photochromic curable composition | Radically polymerizable monomer (pts by wt) | Photochromic compound (pts by wt) |
|---|---|---|
| [A] | BPEO/ABPE/TMPT/9GDA/14G/GMA 40/5/30/18/5/1 | PC1/PC2/PC3 0.4/0.5/2.5 |
| [B] | BPEO/ABPE/TMPT/9GDA/14G/GMA 40/5/30/18/5/1 | PC3/PC4/PC11 0.2/2.0/0.55 |
| [C] | BPEO/TMPT/9GDA/EB6A/GMA 50/25/15/10/1 | PC1/PC10/PC11/PC12 0.4/0.5/2.5 |
| [D] | BPEO/TMPT/9GDA/EB6A/GMA 50/25/15/10/1 | PC1/PC2/PC3/PC6/PC11/PC12 0.45/0.27/0.32/1.8/0.18/0.5 |
| [E] | BPEO/TMPT/9GDA/EB6A/GMA 50/25/15/10/1 | PC1/PC10/PC11/PC12 1.69/0.143/0.215/1.08 |

Table 11 (continued)

| Photochromic curable composition | Polymerization initiator (pts by wt) | Stabilizer (pts by wt) | Silane coupling agent (pts by wt) | Leveling agent (pts by wt) |
|---|---|---|---|---|
| [A] | CGI819 0.30 | LS765/IRG245 5/3 | TSL 6.0 | SiL1 0.1 |
| [B] | CGI819 0.30 | LS765/IRG245 5/3 | TSL 6.0 | SiL1 0.1 |
| [C] | CGI1870 0.35 | LS765 5.0 | TSL 6.0 | SiL1 0.4 |
| [D] | CGI1870 0.35 | LS765 5.0 | TSL 6.0 | SiL1 0.4 |
| [E] | CGI1870 0.35 | LS765/IRG245 5/3 | TSL 6.0 | SiL1 0.4 |

(Evaluating the hard coat layerson the photochromic coat layers)

In the following Examples and Comparative Examples, first, photochromic lenses were prepared by the coating method by using the above photochromic curable compositions. By using the coating compositions, further, hard coat layers were formed on the surfaces of the photochromic lenses to prepare photochromic hard-coated lenses which were evaluated for their photochromic properties and yellow turning deterioration in addition to the above evaluation. The evaluations were conducted by preparing the photochromic lenses and the photochromic hard-coated lenses each in a number of 10 pieces. The photochromic properties and values of developing yellow color are average values.

(Evaluating the photochromic properties)

Absorption wavelength and color density when the photochromic hard-coated lens was developing color were measured by using the MCPD-3000 manufactured by Otsuka Denshi Co.

(Evaluating the yellow turning deterioration [evaluating ΔYI])

The following aging promotion testing was conducted to evaluate the yellow turning deterioration by the irradiation with light. That is, by using the xenon weatherometer X25 (2.5 kW xenon arc lamp) manufactured by Suga Shikenki Co., the sample photochromic lens was irradiated with light for 100 hours under the conditions of an irradiation intensity of 40 $W/m^2$ and a lens surface temperature of 50˚C to promote the aging. Next, by using the SM Color Computer (SM-T) manufactured by Suga Shikenki Co., YI($YI_0$) before promoting the aging and YI($YI_{100}$) after having promoted the aging were measured, and the degree of yellow turning deterioration was found according to the following formula to evaluate the yellow turning deterioration.

$$\text{Degree of yellow turning deterioration } (\Delta YI) = YI_{100} - YI_0$$

The smaller the degree of yellow-color developing deterioration (ΔYI), the smaller the degree of yellow turning deterioration of the lens after aged and the better the resistance of the lens against the yellow turning deterioration.

Example 34.

(Preparation of a photochromic lens)

A resin substrate (lens substrate MRA) of a thickness of 2 mm was dewaxed with acetone to a sufficient degree, treated in an aqueous solution containing 5% of sodium hydroxide maintained at 50˚C for 4 minutes, washed with flushing water for 4 minutes, washed with distilled water of 40˚C for 4 minutes, and was dried at 70˚C. Next, a moisture-curing primer ("Take-Seal PFR402-TP-4" manufactured by Takebayashi Kagaku Kogyo Co.) and an ethyl acetate were so mixed together that their amounts were 50 parts by mass, respectively, and to this mixed solution was added 0.03 parts by mass of a leveling agent SiL1 (silicone type surfactant) followed by sufficient stirring in a nitrogen atmosphere until the mixture became homogeneous to thereby obtain a primer composition. By using a spin coater, 1H-DX2, manufactured by MIKASA Co. , the primer composition was applied by spin-coating onto the surfaces of the MRA lens substrate and was left to stand at room temperature for 15 minutes to prepare a lens substrate (primer-treated lens) having a primer layer of a thickness of 7 μm.
Next, about 1g of the photochromic curable composition [A] was applied by spin-coating onto the surfaces of the above primer-treated lens, irradiated with ultraviolet rays in a nitrogen gas atmosphere under the following conditions and was, further, heat-treated in a constant temperature oven maintained at 110˚C to obtain a photochromic lens (PCL1) having a photochromic coat layer of a thickness of 40 ± 1 μm. Ultraviolet ray irradiation conditions:

Source of light: F3000SQ mounted with D valve, manufactured by Fusion UV Systems Co.
Output: 150 $mW/cm^2$ (405 nm)
Irradiation time: 3 minutes

(Preparation of photochromic hard-coated lenses)

The photochromic lens obtained by the above method was dipped in an aqueous solution containing 20% of NaOH maintained at 60˚C for 10 minutes. The thus treated photochromic lens was dipped in the coating composition 1 that was prepared as described above, and was pulled up at a rate of 30 cm/min. to apply the coating composition 1 onto the surfaces thereof. Next, the coating composition 1 was dried at 70˚C for 15 minutes, maintained at 90˚C for 2 hours to cure it, and a photochromic hard-coated lens was obtained forming a hard coat layer of a thickness of about 3 μm. The photochromic hard-coated lens was evaluated for its various properties to obtain the following results. Appearance: ○, steel wool scratch resistance: A, Bayer scratch resistance: 6.5, close adhesion:100/100, color density at a maximum absorption wavelength of 571 nm: 0.92, degree of yellow turning deterioration ΔYI: 2.0. Table 12 shows these results.

Examples 35 to 68 and Comparative Examples 9 to 16.

Photochromic lenses (non-hard-coated) were prepared by the same method as that of Example 34 but using resin substrates (lens substrates), primer compositions and photochromic curable compositions shown in Tables 12 to 14, and were evaluated in the same manner as in Example 34. Further, by using the photochromic lenses prepared by the above method and the coating compositions shown in Tables 1 to 4, hard coat layers were formed by the same method as that of Example 34 to obtain photochromic hard-coated lenses. The photochromic hard-coated lenses were evaluated in the same manner as in Example 34 to obtain the results as shown in Tables 12 to 14.
Here, Example 35 has used the coating composition 1 that had been stored at 15˚C for 2 months.
Table 12

| NO | Lens substrate | Primer composition | Photochromic curable composition | Coating composition |
|---|---|---|---|---|
| Ex. 34 | MRA | PR1 | [A] | Composition 1 |
| Ex. 35 | MRA | PR1 | [A] | Composition 1* |
| Ex. 36 | MRA | PR1 | [B] | Composition 1 |
| Ex. 37 | MRA | PR1 | [C] | Composition 1 |
| Ex. 38 | MRA | PR1 | [D] | Composition 1 |
| Ex. 39 | MRA | PR1 | [E] | Composition 1 |
| Ex. 40 | MRA | PR2 | [A] | Composition 1 |
| Ex. 41 | MRA | PR1 | [A] | Composition 2 |
| Ex. 42 | MRA | PR1 | [A] | Composition 3 |
| Ex. 43 | MRA | PR1 | [A] | Composition 4 |
| Ex. 44 | MRA | PR1 | [A] | Composition 5 |
| Ex. 45 | MRA | PR1 | [A] | Composition 6 |
| Ex. 46 | MRA | PR1 | [A] | Composition 7 |
| Ex. 47 | MRA | PR1 | [A] | Composition 8 |
| Ex. 48 | MRA | PR1 | [A] | Composition 9 |
| Ex. 49 | MRA | PR1 | [A] | Composition 10 |
| Ex. 50 | MRA | PR1 | [A] | Composition 11 |
| Ex. 51 | MRA | PR1 | [A] | Composition 12 |
| Ex. 52 | MRA | PR1 | [A] | Composition 13 |
| Ex. 53 | MRA | PR1 | [A] | Composition 14 |

*Coating composition 1 after stored at 15°C for 2 months.

Table 12 (continued)

| NO | Photochromic hard-coated lens | | | | | | | |
|---|---|---|---|---|---|---|---|---|
| | Thickness of hard coating (μm) | Appearance | Steel wool scratch resistance | Bayer scratch resistance | Close adhesion | Photochromic property | | ΔYI |
| | | | | | | λ max (nm) | Color density | |
| Ex. 34 | 3.3 | ○ | A | 6.5 | 100/100 | 571 | 0.92 | 2.0 |
| Ex. 35 | 3.3 | ○ | A | 5.9 | 100/100 | 571 | 0.95 | 3.0 |
| Ex. 36 | 3.2 | ○ | A | 6.3 | 100/100 | 564 | 0.70 | 2.1 |
| Ex. 37 | 3.3 | ○ | A | 6.4 | 100/100 | 584 | 0.92 | 3.5 |
| Ex. 38 | 3.1 | ○ | A | 6.5 | 100/100 | 582 | 0.78 | 2.0 |
| Ex. 39 | 3.1 | ○ | A | 6.2 | 100/100 | 571 | 0.91 | 2.0 |
| Ex. 40 | 3.1 | ○ | A | 6.2 | 100/100 | 571 | 0.91 | 2.0 |
| Ex. 41 | 3.2 | ○ | A | 5.6 | 100/100 | 571 | 0.90 | 2.1 |
| Ex. 42 | 3.2 | ○ | A | 5.8 | 100/100 | 571 | 0.91 | 2.0 |
| Ex. 43 | 3.3 | ○ | A | 6.3 | 100/100 | 571 | 0.91 | 2.0 |
| Ex. 44 | 3.3 | ○ | A | 6.5 | 100/100 | 571 | 0.92 | 1.9 |
| Ex. 45 | 3.5 | ○ | A | 6.5 | 100/100 | 571 | 0.90 | 2.0 |
| Ex. 46 | 3.2 | ○ | A | 6.3 | 100/100 | 571 | 0.92 | 2.0 |
| Ex. 47 | 2.5 | ○ | A | 6.0 | 100/100 | 571 | 0.92 | 2.0 |
| Ex. 48 | 2.0 | ○ | A | 5.7 | 100/100 | 571 | 0.90 | 2.0 |
| Ex. 49 | 3.5 | ○ | A | 6.5 | 100/100 | 571 | 0.91 | 2.1 |
| Ex. 50 | 3.0 | ○ | A | 6.3 | 100/100 | 571 | 0.91 | 2.0 |
| Ex. 51 | 2.5 | ○ | A | 6.0 | 100/100 | 571 | 0.92 | 2.0 |
| Ex. 52 | 2.0 | ○ | A | 5.7 | 100/100 | 571 | 0.89 | 2.1 |
| Ex. 53 | 3.3 | ○ | A | 6.2 | 100/100 | 571 | 0.89 | 2.2 |

Table 13

| NO | Lens substrate | Primer composition | Photochromic curable composition | Coating composition |
|---|---|---|---|---|
| Ex. 54 | MRA | PR1 | [A] | Composition 15 |
| Ex. 55 | MRA | PR1 | [A] | Composition 16 |
| Ex. 56 | MRA | PR1 | [A] | Composition 17 |
| Ex. 57 | MRA | PR1 | [A] | Composition 18 |
| Ex. 58 | MRA | PR1 | [A] | Composition 19 |
| Ex. 59 | MRA | PR1 | [A] | Composition 20 |
| Ex. 60 | MRA | PR1 | [A] | Composition 21 |
| Ex. 61 | MRA | PR1 | [A] | Composition 22 |
| Ex. 60 | MRA | PR1 | [A] | Composition 23 |
| Ex. 62 | MRA | PR1 | [A] | Composition 24 |
| Ex. 63 | MRA | PR1 | [A] | Composition 25 |
| Ex. 64 | MRA | PR1 | [A] | Composition 26 |
| Ex. 65 | MRA | PR1 | [A] | Composition 27 |
| Ex. 66 | MRA | PR1 | [A] | Composition 28 |
| Ex. 67 | MRA | PR1 | [A] | Composition 29 |
| Ex. 68 | MRA | PR1 | [A] | Composition 30 |

Table 13 (continued)

| NO | Photochromic hard-coated lens | | | | | | | |
|---|---|---|---|---|---|---|---|---|
| | Thickness of hard coating (µm) | Appearance | Steel wool scratch resistance | Bayer scratch resistance | Close adhesion | Photochromic property | | ΔYI |
| | | | | | | λ max (nm) | Color density | |
| Ex. 54 | 3.2 | ○ | A | 6.3 | 100/100 | 571 | 0.90 | 2.1 |
| Ex. 55 | 3.2 | ○ | A | 5.8 | 100/100 | 571 | 0.91 | 2.5 |
| Ex. 56 | 3.3 | ○ | A | 6.1 | 100/100 | 571 | 0.91 | 2.0 |
| Ex. 57 | 3.2 | ○ | A | 6.3 | 100/100 | 571 | 0.92 | 2.0 |
| Ex. 58 | 3.3 | ○ | A | 6.2 | 100/100 | 571 | 0.90 | 2.0 |
| Ex. 59 | 3.2 | ○ | A | 5.0 | 100/100 | 571 | 0.92 | 2.5 |
| Ex. 60 | 3.1 | ○ | A | 5.8 | 100/100 | 571 | 0.92 | 2.1 |
| Ex. 61 | 3.2 | ○ | A | 6.2 | 100/100 | 571 | 0.90 | 2.0 |
| Ex. 60 | 3.2 | ○ | A | 6.8 | 100/100 | 571 | 0.91 | 1.8 |
| Ex. 62 | 3.1 | ○ | A | 5.3 | 100/100 | 571 | 0.91 | 2.6 |
| Ex. 63 | 3.0 | ○ | A | 6.1 | 100/100 | 571 | 0.92 | 2.1 |
| Ex. 64 | 2.8 | ○ | A | 6.0 | 100/100 | 571 | 0.89 | 2.0 |
| Ex. 65 | 2.7 | ○ | A | 5.7 | 100/100 | 571 | 0.85 | 1.7 |
| Ex. 66 | 2.7 | ○ | A | 5.7 | 100/100 | 571 | 0.87 | 1.8 |
| Ex. 67 | 2.8 | ○ | A | 5.8 | 100/100 | 571 | 0.83 | 1.8 |
| Ex. 68 | 3.0 | ○ | A | 6.7 | 100/100 | 571 | 0.91 | 1.9 |

Table 14

| NO | Lens substrate | Primer composition | Photochromic curable composition | Coating composition |
|---|---|---|---|---|
| Comp. Ex. 9 | MRA | PR1 | [A] | Comparative composition 1 |
| Comp. Ex. 10 | MRA | PR1 | [A] | Comparative composition 2 |
| Comp. Ex. 11 | MRA | PR1 | [A] | Comparative composition 3 |
| Comp. Ex. 12 | MRA | PR1 | [A] | Comparative composition 4 |
| Comp. Ex. 13 | MRA | PR1 | [A] | Comparative composition 5 |
| Comp. Ex. 14 | MRA | PR1 | [A] | Comparative composition 6 |
| Comp. Ex. 15 | MRA | PR1 | [A] | Comparative composition 7 |
| Comp. Ex. 16 | MRA | PR1 | [A] | Comparative composition 8 |

Table 14 (continued)

| NO | Photochromic hard-coated lens | | | | | | | |
|---|---|---|---|---|---|---|---|---|
| | Thickness of hard coating (μm) | Appearance | Steel wool scratch resistance | Bayer scratch resistance | Close adhesion | Photochromic property | | ΔYI |
| | | | | | | λ max (nm) | Color density | |
| Comp. Ex. 9 | 2.9 | ○ | A | 4.8 | 100/100 | 571 | 0.91 | 2.9 |
| Comp. Ex. 10 | 3.4 | × repelling | - | - | - | 571 | 0.90 | - |
| Comp. Ex. 11 | 1.7 | ○ | A | 5.2 | 100/100 | 571 | 0.92 | 2.3 |
| Comp. Ex. 12 | 3.5 | × *1 | - | - | - | 571 | 0.92 | - |
| Comp. Ex. 13 | 1.7 | ○ | A | 5.3 | 100/100 | 571 | 0.90 | 2.3 |
| Comp. Ex. 14 | 2.9 | ○ | A | 4.3 | 100/100 | 571 | 0.91 | 2.3 |
| Comp. Ex. 15 | 3.1 | ○ | A | 6.8 | 100/100 | 571 | 0.89 | 1.7 |
| Comp. Ex. 16 | 3.3 | ○ | A | 6.2 | 100/100 | 571 | 0.89 | 2.1 |

*1: interference fringes

As will be obvious from the Examples, the optical products having a hard coat layer formed by using the coating compositions of the present invention were free of problems concerning cracks, transparency of the coat layer, appearance such as repelling, and provided excellent results concerning all of cloudiness of the coat layer, Bayer scratch resistance and storage stability as compared to those of Comparative Examples. Further, the photochromic hard-coated lenses having a hard coat layer formed by using the coating compositions of the present invention suppressed the yellow turning deterioration even after used for extended periods of time, and suppressed the degree of yellow turning deterioration (ΔYI) to be not more than 3.5 and, specifically, not more than 3.0. Besides, appearance, scratch resistance and close adhesion were favorable.

Examples 69 to 77.

(Preparation of coating compositions 31 to 39)

Coating compositions 31 to 39 were prepared by the same method as that of preparing the coating composition 1 but using fine particulate composite metal oxides, organosilicon compounds, water-soluble organic solvents, curing catalysts, aqueous solutions used for the hydrolysis of organosilicon compounds, and surfactants shown in Table 15. The feeding amount ratios of the components and the feeding mass ratios of the water-soluble organic solvents and water were as shown in Table 17. Further, the contents of the components in the coating compositions calculated from the amounts of feeding the components were as shown in Table 18.

Table 15

| Coating composition No. | Fine particulate composite metal oxide (A), pts by mass* | Hydrolyzable organosilicon compound (B), pts by mass | Water-soluble organic solvent (D) | | |
|---|---|---|---|---|---|
| | | | (D1) pts by mass | (D2) pts by mass | (D3) pts by mass |
| Composition 31 | SOL1 41.9 | GDS/GTS/TEOS 10.4/34.0/13.7 | MeOH 62.8 | TBA 17.7 | DAA 57.8 |
| Composition 32 | SOL1 41.9 | GTS/TEOS 44.6/13.5 | MeOH 62.8 | TBA 17.7 | BDO 58.5 |
| Composition 33 | SOL1 41.9 | GTS/TEOS 44.6/13.5 | MeOH 43.4 | TBA 16.5 | PDO 54.7 |
| Composition 34 | SOL1 41.9 | GTS/TEOS 44.6/13.5 | MeOH 62.8 | TBA 17.7 | EDO 58.5 |
| Composition 35 | SOL 41.9 | GTS/BSE 44.6/13.5 | MeOH 62.8 | TBA 17.8 | DAA 58.5 |
| Composition 36 | SOL 41.9 | GTS/BSE 52.7/5.4 | MeOH 62.8 | TBA 17.8 | DAA 58.5 |
| Composition 37 | SOL 41.9 | GTS/BSE 23.1/35.0 | MeOH 62.8 | TBA 17.8 | DAA 58.5 |
| Composition 38 | SOL 41.9 | GTS/TEOS 44.6/13.5 | MeOH 62.8 | nBA 17.8 | DAA 58.5 |
| Composition 39 | SOL 41.9 | GDS/GTS/BSE 4.5/40.1/13.5 | MeOH 62.8 | TBA 17.8 | DAA 58.5 |

* Parts by mass of the fine particulate composite metal oxide.

Table 15 (continued)

| Coating composition No. | Water (C) acid aqueous solution pts by mass | Curing catalyst (E), pts by mass | Surfactant, pts by mass |
|---|---|---|---|
| Composition 31 | 0.017N 41.1 | E1 2.8 | SiL1 0.14 |
| Composition 32 | 0.017N 44.7 | E1 2.8 | SiL1 0.14 |
| Composition 33 | 0.017N 44.7 | E1 2.8 | SiL1 0.14 |
| Composition 34 | 0.017N 44.7 | E1 2.8 | SiL1 0.14 |
| Composition 35 | 0.017N 44.7 | E1 2.8 | SiL1 0.14 |
| Composition 36 | 0.017N 44.7 | E1 2.8 | SiL1 0.14 |
| Composition 37 | 0.017N 44.7 | E1 2.8 | SiL1 0.14 |
| Composition 38 | 0.017N 44.7 | E1 2.8 | SiL1 0.14 |
| Composition 39 | 0.017N 44.7 | E1 2.8 | SiL1 0.14 |

Table 16

| Coating composition No. | Fine particulate composite metal oxide (A), pts by mass* | Hydrolyzable organosilicon compound (B), pts by mass | Water-soluble organic solvent (D) | | |
|---|---|---|---|---|---|
| | | | (D1) pts by mass | (D2) pts by mass | (D3) pts by mass |
| Composition 40** | SOL 41.9 | GDS/GTS/BSE 4.5/40.1/13.5 | MeOH 62.8 | TBA 17.8 | DAA 58.5 |
| Composition 41** | SOL 41.9 | GTS/TEOS 44.6/13.5 | MeOH 62.8 | TBA 17.8 | DAA 58.5 |
| Composition 42** | SOL 41.9 | GTS/BSE 44.6/13.5 | MeOH 62.8 | TBA 17.8 | DAA 58.5 |

* Parts by mass of the fine particulate composite metal oxide.
** Cerium oxide is used.

Table 16 (continued)

| Coating composition No. | Water (C) acid aqueous solution pts by mass | Curing catalyst (E), pts by mass | Surfactant, pts by mass |
|---|---|---|---|
| Composition 40** | 0.017N<br>44.7 | E1<br>2.8 | SiL1<br>0.14 |
| Composition 41** | 0.017N<br>44.7 | E1<br>2.8 | SiL1<br>0.14 |
| Composition 42** | 0.017N<br>44.7 | E1<br>2.8 | SiL1<br>0.14 |

** Cerium oxide is used.

w

Table 17

| Coating composition No. | (A) pts by mass | (B) pts by mass | (C) pts by mass | Water-soluble organic solvent (D) Feeding mass ratio D1/C | Feeding mass ratio D2/C | Feeding mass ratio D3/C | (D) Total pts by mass | (E) pts by mass |
|---|---|---|---|---|---|---|---|---|
| Composition 31 | 41.9 | 58.1 | 44.1 | 1.53 | 0.43 | 1.40 | 138.2 | 2.8 |
| Composition 32 | 41.9 | 58.1 | 44.7 | 1.40 | 0.40 | 1.31 | 139.0 | 2.8 |
| Composition 33 | 41.9 | 58.1 | 44.7 | 1.40 | 0.40 | 1.31 | 139.0 | 2.8 |
| Composition 34 | 41.9 | 58.1 | 44.7 | 1.40 | 0.40 | 1.31 | 139.0 | 2.8 |
| Composition 35 | 41.9 | 58.1 | 44.7 | 1.40 | 0.40 | 1.31 | 139.0 | 2.8 |
| Composition 36 | 41.9 | 58.1 | 44.7 | 1.40 | 0.40 | 1.31 | 139.0 | 2.8 |
| Composition 37 | 41.9 | 58.1 | 44.7 | 1.40 | 0.40 | 1.31 | 128.7 | 2.8 |
| Composition 38 | 41.9 | 58.1 | 44.7 | 1.40 | 0.40 | 1.31 | 139.0 | 2.8 |
| Composition 39 | 41.9 | 58.1 | 44.1 | 1.53 | 0.43 | 1.40 | 138.2 | 2.8 |
| Composition 40 | 41.9 | 58.1 | 44.7 | 1.40 | 0.40 | 1.31 | 139.0 | 2.8 |
| Composition 41 | 41.9 | 58.1 | 44.1 | 1.53 | 0.43 | 1.40 | 138.2 | 2.8 |
| Composition 42 | 41.9 | 58.1 | 44.7 | 1.40 | 0.40 | 1.31 | 139.0 | 2.8 |

Table 18

| Coating composition No. | (A) pts by mass | (B') pts by mass | (C) pts by mass | Water-soluble organic solvent (D) Feeding mass ratio D1/C | Feeding mass ratio D2/C | Feeding mass ratio D3/C | (D) Total pts by mass | (E) pts by mass |
|---|---|---|---|---|---|---|---|---|
| Composition 31 | 49.2 | 50.8 | 31.5 | 3.41 | 0.65 | 2.18 | 196.9 | 3.3 |
| Composition 32 | 49.4 | 50.6 | 35.2 | 3.11 | 0.59 | 1.96 | 199.4 | 3.3 |
| Composition 33 | 49.4 | 50.6 | 35.2 | 3.11 | 0.59 | 1.96 | 199.4 | 3.3 |
| Composition 34 | 49.4 | 50.6 | 35.2 | 3.11 | 0.59 | 1.96 | 199.4 | 3.3 |
| Composition 35 | 48.9 | 51.1 | 35.5 | 3.01 | 0.58 | 1.93 | 195.8 | 3.3 |
| Composition 36 | 47.6 | 52.4 | 35.2 | 2.85 | 0.57 | 1.89 | 187.0 | 3.2 |
| Composition 37 | 52.9 | 47.1 | 36.3 | 3.46 | 0.62 | 2.03 | 221.7 | 3.5 |
| Composition 38 | 49.4 | 50.6 | 35.2 | 3.11 | 0.59 | 2.96 | 199.4 | 3.3 |

(continued)

| Coating composition No. | (A) pts by mass | (B') pts by mass | (C) pts by mass | Water-soluble organic solvent (D) Feeding mass ratio D1/C | Feeding mass ratio D2/C | Feeding mass ratio D3/C | (D) Total pts by mass | (E) pts by mass |
|---|---|---|---|---|---|---|---|---|
| Composition 39 | 48.8 | 51.2 | 35.7 | 2.96 | 0.58 | 1.91 | 194.6 | 3.3 |
| Composition 40 | 48.8 | 51.2 | 35.7 | 2.96 | 0.58 | 1.91 | 194.6 | 3.3 |
| Composition 41 | 49.4 | 50.6 | 35.2 | 3.11 | 0.59 | 2.96 | 199.4 | 3.3 |
| Composition 42 | 48.9 | 51.1 | 35.5 | 3.01 | 0.58 | 1.93 | 195.8 | 3.3 |

(Production of laminates, evaluation of laminates)

Hard coat layers were formed on the surfaces of the resin substrates (lens substrates) by the same coating method as that of Example 1 but using the coating compositions 31 to 39 prepared above, and were evaluated for their properties to obtain the results as shown in Table 19 which also shows the thicknesses of the hard coat layers.

Table 19

| | Lens substrate | Coating composition | Properties of hard coating *1 | *2 | *3 | *4 | Close adhesion | QUV test, close adhesion | Storage stability |
|---|---|---|---|---|---|---|---|---|---|
| Ex. 69 | MRA | Composition 31 | 3.3 | ○ | A | 6.0 | 100/100 | 192 hrs | 2 months |
| Ex. 70 | MRA | Composition 32 | 3.1 | ○ | A | 6.3 | 100/100 | 192 hrs | 1.0 month(*5) |
| Ex. 71 | MRA | Composition 33 | 3.0 | ○ | A | 6.0 | 100/100 | 192 hrs | 1.5 months (*5) |
| Ex. 72 | MRA | Composition 34 | 3.1 | ○ | A | 6.1 | 100/100 | 192 hrs | 1.0 month(*5) |
| Ex. 73 | MRA | Composition 35 | 3.3 | ○ | A | 6.2 | 100/100 | 192 hrs | 2 months |
| Ex. 74 | MRA | Composition 36 | 3.2 | ○ | A | 5.8 | 100/100 | 192 hrs | 2 months |
| Ex. 75 | MRA | Composition 37 | 3.1 | ○ | A | 6.5 | 100/100 | 192 hrs | 2 months |
| Ex. 76 | MRA | Composition 38 | 3.3 | ○ | A | 6.2 | 100/100 | 192 hrs | 2 months |
| Ex. 77 | MRA | Composition 39 | 3.2 | ○ | A | 6.2 | 100/100 | 192 hrs | 2 months |

*1: Thickness (μm)
*2: Appearance
*3: Steel wool scratch resistance
*4: Bayer scratch resistance
*5: coating clouded

Example 78 (Coating composition 40)

40.1 Parts by mass of a γ -glycidoxypropytrimethoxysilane, 4.5 parts by pass of a γ -glycidoxypropylmethyldimethoxysilane, 13.5 parts by mass of a 1,2-bis(triethoxysilyl)ethane, 0.14 parts by mass of a silicone type surfactant (trade name "L7001" manufactured by Toray-Dow Coning Co., described as Sil1 in Table), 17.8 parts by mass of t-butanol and 58.5 parts by mass of diacetone alcohol were mixed together. A mixed solution of 28.7 parts by mass of a cerium oxide-dispered aqueous solution (Kneedral U-15 manufactured by Tagi Kagaku Co., solid content: 15% by mass, acetic acid: 2% by mass, water: 83% by mass) and 20.3 parts by mass of a 0.017 N hydrochloric acid aqueous solution was added to the above solution with sufficient stirring. After the addition has been finished, the stirring was continued at 15 to 30˚C for 20 hours. Next, after 2.8 parts by mass of a tris (2, 4-pentanedionato) aluminum (III) was added thereto, the mixture was stirred at 20 to 25˚C for 1 hour, and 104. 7 parts by mass of a fine particulate composite metal oxide dispersed in methanol (SOL1)(41.9 parts by mass of fine particulate composite metal oxide, 62.8 parts by mass of methanol) was mixed therein followed by stirring for 24 hours to obtain a coating composition 40 of the present invention. The composition of feeding and feeding amounts were as shown in Table 16, and the feeding amount ratios of the components and the feeding mass ratio of the water-soluble organic solvent and water were as shown in Table 17. Further, the contents of the components in the coating composition calculated from the feeding amounts of the components were as shown in Table 18. Further, the mass of water in the obtained coating composition was found by the Karl Fischer's method, and the mass of the water-soluble organic solvent was found by gas chromatography. The mass ratio thereof was as shown in Table 18. The masses of water and water-soluble organic solvent were nearly the same as the masses calculated from the amounts of feeding, and it was confirmed that the hydrolyzable organosilicon compound had been hydrolyzed in whole amount.

The obtained coating composition 40 was applied by the same method as that of Example 34 to form a hard coat layer to thereby obtain a photochromic hard-coated lens. The photochromic hard-coated lens was evaluated in the same manner as in Example 34 to obtain results as shown in Table 20.

Examples 79 and 80 (coating compositions 41 and 42).

Coating compositions 41 and 42 were prepared by the same method as that of preparing the coating composition 78 but using fine particulate composite metal oxides, organosilicon compounds, water-soluble organic solvents, curing catalysts, aqueous solutions used for the hydrolysis of organosilicon compounds and surfactants shown in Table 16. The feeding amount ratios of the components and the feeding mass ratios of the water-soluble organic solvents and water were as shown in Table 17. Further, the contents of the components in the coating compositions calculated from the amounts of feeding the components were as shown in Table 18. The obtained coating compositions 41 and 42 were applied by the same method as that of Example 78 to form hard coat layers to thereby obtain photochromic hard-coated lenses. The photochromic hard-coated lenses were evaluated in the same manner as in Example 34 to obtain results as shown in Table 20.

Table 20

| NO | Lens substrate | Primer composition | Photochromic curable composition | Coating composition |
|---|---|---|---|---|
| Ex. 78 | MRA | PR1 | [A] | Composition 40 |
| Ex. 79 | MRA | PR1 | [A] | Composition 41 |
| Ex. 80 | MRA | PR1 | [A] | Composition 42 |

Table 20 (continued)

| NO | Photochromic hard-coated lens | | | | | | | |
|---|---|---|---|---|---|---|---|---|
| | Thickness of hard coating (μm) | Appearance | Steel wool scratch resistance | Bayer scratch resistance | Close adhesion | Photochromic property | | ΔYI |
| | | | | | | λ max (nm) | Color density | |
| Ex. 78 | 3.3 | ○ | A | 6.3 | 100/100 | 571 | 0.92 | 1.2 |
| Ex. 79 | 3.2 | ○ | A | 6.3 | 100/100 | 571 | 0.92 | 1.3 |
| Ex. 80 | 3.3 | ○ | A | 6.5 | 100/100 | 571 | 0.92 | 1.2 |

Description of Reference Numerals:

- 10 - laminate
- 1 - resin substrate
- 2 - primer layer
- 3 - photochromic coat layer
- 4 - hard coat layer
- 5 - reflection-preventing film

## Claims

**1.** A coating composition comprising:

(A) a fine particulate composite metal oxide;
(B') a hydrolyzed product of a hydrolyzable Organosilicon compound containing an organosilicon compound (B1) that has an epoxy group and a hydrolyzable group;
(C) water;
(D) a water-soluble organic solvent; and
(E) a curing catalyst;

wherein said water-soluble organic solvent (D) is a solvent that contains (D1) a low-boiling lowly viscous alcohol having not more than 3 carbon atoms, (D2) a low-boiling highly viscous alcohol selected from the group consisting of t-butanol, n-butanol and 2-butanol, and (D3) a high-boiling organic solvent having a boiling point of 150˚C to 200˚C;
said low-boiling lowly viscous alcohol (D1) being contained in such an amount that the mass ratio (D1/C) thereof to said water (C) is in a range of 1.80 to 7.00;
said low-boiling highly viscous alcohol (D2) being contained in such an amount that the mass ratio (D2/C) thereof to said water (C) is 0.24 to 2.50; and
said high-boiling organic solvent (D3) being contained in such an amount that the mass ratio (D3/C) thereof to said water (C) is 1.10 to 4.40.

**2.** The coating composition according to claim 1, wherein said low-boiling highly viscous alcohol (D2) is a t-butyl alcohol and said high-boiling organic solvent (D3) is a diacetone alcohol.

**3.** The coating composition according to claim 1, wherein said fine particulate composite oxide (A) is contained in an amount of 25.0 to 70.0 parts by mass, said water (C) is contained in an amount of 5.0 to 65.0 parts by mass, and said curing catalyst (E) is contained in an amount of 1.0 to 5.0 parts by mass per 100 parts by mass of the total amount of said fine particulate composite oxide (A) and said hydrolyzed product (B').

**4.** A process for producing a coating composition by providing:

(A) a fine particulate composite metal oxide;
(B) a hydrolyzable organosilicon compound containing an organosilicon compound (B1) that has an epoxy group and a hydrolyzable group;
(C) water;
(D) a water-soluble organic solvent; and
(E) a curing catalyst;

and forming a hydrolyzed product (B') of said hydrolyzable organosilicon compound (B) in a step of mixing said components;
wherein (D1) a low-boiling lowly viscous alcohol having not more than 3 carbon atoms, (D2) a low-boiling highly viscous alcohol selected from the group consisting of t-butanol, n-butanol and 2-butanol, and (D3) a high-boiling organic solvent having a boiling point of 150˚C to 200˚C, are used in combination as said water-soluble organic solvent (D); and
the components (A), (B), (C), (D) and (E) are used in such amounts that per 100 parts by mass of the total amount of said fine particulate composite oxide (A) and said hydrolizable organosilicon compound (B):

said fine particulate composite oxide (A) is fed in an amount of 20.0 parts by mass to 60.0 parts by mass, said water (C) is fed in an amount of 20.0 to 70.0 parts by mass, and said curing catalyst (E) is fed in an amount of 0.9 to 5.0 parts by mass;
the feeding mass ratio (D1/C) of said low-boiling lowly viscous alcohol (D1) to said water (C) being 0.55 to 3.00;
the feeding mass ratio (D2/C) of said low-boiling highly viscous alcohol (D2) to said water (C) being 0.18 to 1.80; and
the feeding mass ratio (D3/C) of said high-boiling organic solvent (D3) to said water (C) being 0.70 to 2.70.

**5.** The process for producing a coating composition according to claim 4, wherein a t-butyl alcohol is used as said low-boiling highly viscous alcohol (D2) and a diacetone alcohol is used as said high-boiling organic solvent (D3).

**6.** The process for producing a coating composition according to claim 4, wherein said hydrolyzable organosilicon compound (B) is hydrolyzed in the absence of said fine particulate composite metal oxide (A) , and said fine particulate composite metal oxide (A) is mixed after the hydrolyzed product (B') of said hydrolyzable organosilicon compound (B) has been formed.

**7.** The process for producing a coating composition according to claim 4, wherein said hydrolyzable organosilicon compound (B), further, contains an organosilicon compound (B2) having not less than 4 hydrolyzable groups in the molecules thereof, and the organosilicon compound (B1) having an epoxy group and a hydrolyzable group and said organosilicon compound (B2) are fed at a mass ratio (B1/B2) of 0.30 to 10.00.

**8.** The process for producing a coating composition according to claim 7, wherein a tetraalkoxysilane is used as said organosilicon compound (B2) having not less than 4 hydrolyzable groups in the molecules thereof.

**9.** The process for producing a coating composition according to claim 7, wherein a disilane compound represented by the following formula (1),

[Chemical 1]

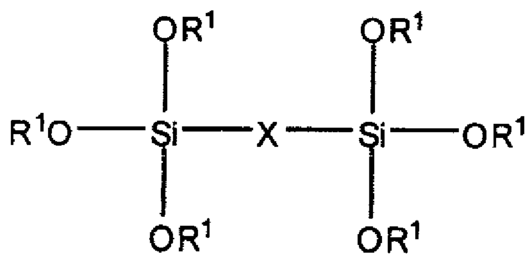

(1)

wherein $R^1$ is a methyl group or an ethyl group, and X is
an alkylene group having 2 to 3 carbon atoms, is used as said organosilicon compound (B2) having not less than 4 hydrolyzable groups in the molecules thereof.

**10.** A laminate in which a hard coat layer obtained by curing the coating composition of claim 1 is formed on the surface of a resin substrate.

**11.** The laminate according to claim 10, wherein said resin substrate is a photochromic optical substrate.

**12.** The laminate according to claim 11, wherein said photochromic optical substrate has, on the surface thereof, a photochromic coat layer obtained by curing the curable composition that contains a photochromic compound, and said hard coat layer is formed on said photochromic coat layer.

Fig. 1

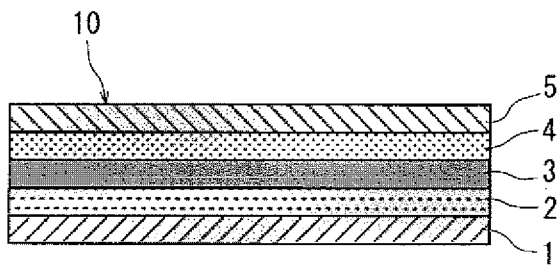

**INTERNATIONAL SEARCH REPORT**

International application No. PCT/JP2010/050227

A. CLASSIFICATION OF SUBJECT MATTER
*C09D183/06*(2006.01)i, *B05D5/00*(2006.01)i, *B05D7/24*(2006.01)i, *C09D5/00*(2006.01)i, *C09D7/12*(2006.01)i

According to International Patent Classification (IPC) or to both national classification and IPC

B. FIELDS SEARCHED

Minimum documentation searched (classification system followed by classification symbols)
C09D183/06, B05D5/00, B05D7/24, C09D5/00, C09D7/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-131899 A (Tokuyama Corp.), 25 May 2006 (25.05.2006), entire text (particularly, claim 1; paragraph [0065]; examples 1 to 4, 7, 10, 11) & US 2008/0286583 A1 & EP 1798260 A1 & WO 2006/038725 A1 | 1-12 |
| A | WO 2008/105306 A1 (Tokuyama Corp.), 04 September 2008 (04.09.2008), entire text & EP 2113542 A | 1-12 |
| A | JP 2004-224965 A (Tokuyama Corp.), 12 August 2004 (12.08.2004), entire text (Family: none) | 1-12 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 February, 2010 (25.02.10) | 09 March, 2010 (09.03.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2010/050227

C (Continuation). DOCUMENTS CONSIDERED TO BE RELEVANT

| Category* | Citation of document, with indication, where appropriate, of the relevant passages | Relevant to claim No. |
|---|---|---|
| A | JP 07-085788 A (Asahi Glass Co., Ltd.), 31 March 1995 (31.03.1995), entire text (Family: none) | 1-12 |
| A | JP 2005-107093 A (Konica Minolta Opto, Inc.), 21 April 2005 (21.04.2005), entire text (Family: none) | 1-12 |
| A | JP 2004-075970 A (Shin-Etsu Chemical Co., Ltd.), 11 March 2004 (11.03.2004), entire text & US 2003/0236347 A1 & EP 1375615 A2 | 1-12 |
| A | JP 10-245521 A (Shin-Etsu Chemical Co., Ltd.), 14 September 1998 (14.09.1998), entire text (Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 57002735 B
- JP 5264805 A
- JP 10245523 A
- JP 9049215 A
- JP 2002363442 A
- JP 2006111702 A
- WO 2003011967 A
- JP 2003342310 A

### Non-patent literature cited in the description

- **Shozo Asahara et al.** A Handbook of Solvents. Kodansha Co., Scientific, 1976